# EUROPEAN PATENT APPLICATION

(11) **EP 3 284 331 A1**
(43) Date of publication of application: **21.02.2018**
(21) Application number: 16830353.5
(22) Date of filing: 15.07.2016
(51) Int. Cl.: A01C 1/06

(54) **STEELMAKING SLAG-COATED SEED AND PRODUCTION METHOD THEREFOR**

(30) Priority: 29.07.2015 JP 2015149677; 04.09.2015 JP 2015175125; 29.10.2015 JP 2015212605
(71) Applicant: Nippon Steel & Sumitomo Metal Corporation, Tokyo 100-8071 (JP); The Sangyo Shinko Co., Ltd., Tokyo 136-0071 (JP)
(72) Inventor: ITO, Kimio, Chiyoda-ku, Tokyo 100-8071 (JP); ITO, Shuichi, Nagoya-shi, Aichi 455-0026 (JP); OZAKI, Kohei, Nagoya-shi, Aichi 455-0026 (JP)
(74) Representative: Vossius & Partner Patentanwälte Rechtsanwälte mbB
(86) International application number: PCT/JP2016/070993
(87) International publication number: WO 2017/018248

(57) **Abstract**

[Object] Provided is a steelmaking slag-coated seed and a method for producing the same, which can be produced with less time and effort of a worker and at lower cost, and yet can include a sufficient amount of a uniform coating layer based on steelmaking slag. [Solution] A steelmaking slag-coated seed includes a seed of a rice plant or the like and a steelmaking slag layer formed on an outside of the seed; the steelmaking slag layer is a covering layer made of steelmaking slag powder obtained by pulverizing steelmaking slag; the steelmaking slag contains a prescribed amount or more of calcium relative to all components of the steelmaking slag.

## Description

### Technical Field

The present invention relates to a steelmaking slag-coated seed in which the periphery of a seed is coated with steelmaking slag powder and a method for producing the same.

### Background Art

Rice is a very important food consumed as the staple food by approximately two billion people in the world. In Japan, it is important that rice be able to be stably produced and supplied and the self-sufficiency rate be enhanced. Further, regions such as Southeast Asia, where rice is the staple food, are experiencing significant economic development, and it is of increasing importance to perform rice cultivation stably and achieve stable supply of rice in these regions.

Methods of rice cultivation include a cultivation method in which seeds (seed rice) are germinated, the seedlings are grown, and the seedlings are planted, and a cultivation method based on direct sowing in which seeds (seed rice) are directly sown. In Japan, rice cultivation based on rice planting is the mainstream because homogeneous, good quality rice can be harvested. However, seedling raising that germinates rice seeds (seed rice) and grows the seedlings and rice planting that plants the seedlings require labor power, and are great factors in cost.

Further, because of falls in the price of rice in recent years, a technology to reduce cost and labor for rice farming in paddy fields is rapidly required. In view of the fact that thus far rice farming has started from producing seedlings and performing rice planting, the reduction of the time and effort of seedling production leads to a great reduction of labor.

The production of rice by direct sowing cultivation can omit seedling raising and rice planting working; therefore, can reduce the amounts of labor power, materials used, etc., and can suppress the cost for rice production. Among the types of direct sowing cultivation of rice, iron coating direct sowing cultivation in which iron-coated seeds are surface-sown is particularly well known. Unlike in the case of transplanting cultivation, the iron-coated seed can be prepared in advance, and therefore the time required for a series of working for sowing in spring can be shortened by performing iron coating treatment in the agricultural off-season during winter. Furthermore, there is no need to use a nursery box during seedling raising. In addition, as well as the reduction of labor power for production, there are various unique advantages derived from the iron coating. For example, since the specific gravity of the iron-coated seed is large, the occurrence of floating can be prevented, and the runoff of seeds can be prevented. Furthermore, the iron layer of the surface of the seed is very strong, and therefore the occurrence of damage by birds, that is, being eaten by birds can be suppressed.

Thus far, technological development has been advanced for the iron coating direct sowing cultivation (e.g., Patent Literature 1). For the seed production of iron coating direct sowing cultivation, a form in which the surface of the seed is coated with a mixture of iron powder and plaster of Paris and the surface is further coated with plaster of Paris as a finish layer has been conventionally employed. This is because the iron powder is oxidized into rust on the surface of the seed by combination with the oxidation promotion capacity that the plaster of Paris has, and the rust acts as glue and sufficiently fixes the coating layer to the seed.

Patent Literature 1 mentions that the peeled-off amount is not changed even when a finish layer of plaster of Paris, which has so far been considered necessary, is not formed, and the particle size of the peeled-off metal powder is smaller than in the case where a finish layer is formed; and a finish layer is not formed on the seed of

### Patent Literature 1.

### Citation List

### Patent Literature

Patent Literature 1: JP 2014-113128A

### Summary of Invention

### Technical Problem

However, in regard to technologies of producing an iron-coated seed including the technology of Patent Literature 1, iron powder is difficult to obtain in some regions, and the price is around 500,000 yen per ton; thus, the source material cost of the iron-coated seed has been very high.

The present invention has been made in order to address such a problem, and an object of the present invention is to provide a steelmaking slag-coated seed that can be directly sown and can be produced at low cost, and a method for producing the same.

### Solution to Problem

The present invention includes roughly two aspects, and according to one aspect of the present invention, there is provided a steelmaking slag-coated seed including: a seed; and a steelmaking slag layer formed on an outside of the seed, in which the steelmaking slag layer is a covering layer made of steelmaking slag powder obtained by pulverizing steelmaking slag, and the steelmaking slag contains 10 mass% or more iron and 30 mass% or more calcium relative to all components of the steelmaking slag.

Further, the seed may be a seed of a rice plant.

Further, the steelmaking slag may contain 10 mass% to 30 mass% iron and 30 mass% to 50 mass% calcium relative to all the components of the steelmaking slag.

Further, the steelmaking slag powder may have a particle size of 600 µm or less, and may contain powder with a particle size of 45 µm or less at 20% or more.

A method for producing a steelmaking slag-coated seed including a seed and a steelmaking slag layer formed on a surface of the seed according to the above aspect includes: a steelmaking slag pulverization process of pulverizing, as steelmaking slag serving as a material of the steelmaking slag layer, steelmaking slag containing 10 mass% or more iron and 30 mass% or more calcium relative to all components of the steelmaking slag into powder; a seed soaking process of incorporating water into a seed before coating; and a steelmaking slag coating process of mixing steelmaking slag powder obtained in the steelmaking slag pulverization process and a seed obtained in the seed soaking process and thereby forming a steelmaking slag layer made of the steelmaking slag powder on a surface of the seed.

Further, the seed may be a seed of a rice plant.

Further, in the steelmaking slag pulverization process, the steelmaking slag may be pulverized into steelmaking slag powder with a particle size of 600 µm or less.

Further, the steelmaking slag powder obtained in the steelmaking slag pulverization process may contain powder with a particle size of 45 µm or less at 20% or more.

Further, according to another aspect of the present invention, there is provided a steelmaking slag-coated seed, in which a seed is covered with steelmaking slag powder containing 25 mass% or more and 50 mass% or less CaO and 8 mass% or more and 30 mass% or less SiO₂.

Further, the steelmaking slag powder may further contain 1 mass% or more and 20 mass% or less MgO, 1 mass% or more and 25 mass% or less Al₂O₃, 5 mass% or more and 35 mass% or less Fe, 1 mass% or more and 8 mass% or less Mn, and 0.1 mass% or more and 5 mass% or less P₂O₅.

A steelmaking slag-coated seed according to the present invention may be covered with one or both of dephosphorization slag and decarburization slag that are kinds of steelmaking slag powder.

Further, the steelmaking slag powder may have a particle size of 600 µm or less.

Further, the seed may be covered with a mixture of the steelmaking slag powder and one or both of gypsum and iron powder.

Further, the seed may be a seed covered with starch.

Further, a surface of the seed may be further covered with gypsum.

Further, a covering portion of the seed may further contain molasses.

A method for producing a steelmaking slag-coated seed according to the above aspect includes: covering a seed with a mixture obtained by mixing steelmaking slag powder containing 25 mass% or more and 50 mass% or less CaO and 8 mass% or more and 30 mass% or less SiO₂, and water; and solidifying the mixture.

Further, the steelmaking slag powder may further contain 1 mass% or more and 20 mass% or less MgO, 1 mass% or more and 25 mass% or less Al₂O₃, 5 mass% or more and 35 mass% or less Fe, 1 mass% or more and 8 mass% or less Mn, and 0.1 mass% or more and 5 mass% or less P₂O₅.

The method for producing a steelmaking slag-coated seed includes: covering a seed with a mixture obtained by mixing one or both of dephosphorization slag and decarburization slag that are kinds of steelmaking slag powder, and water; and solidifying the mixture.

Further, in the method for producing a steelmaking slag-coated seed, the seed may be covered with a mixture obtained by mixing the steelmaking slag powder, water, and one or both of gypsum and iron powder, and the mixture may be solidified.

Further, the mass ratio of water in the mixture may be 10 mass% or more and 80 mass% or less relative to the total mass of the mixture.

Further, the water may be water containing 10 mass% or more and 50 mass% or less molasses.

Further, a seed soaked in a starch aqueous solution may be used as the seed.

Further, a surface of the solidified mixture may be further covered with gypsum.

Further, a surface of the solidified mixture may be further wetted with water containing 0.5 mass% or more and 5 mass% or less sodium alginate, and then the solidified mixture may be dried.

### Advantageous Effects of Invention

According to the present invention, by covering a seed with steelmaking slag containing specific components, it becomes possible to produce a steelmaking slag-coated seed that can be directly sown and can be produced at low cost.

### Brief Description of Drawings

[FIG. 1] FIG. 1 is a schematic diagram showing an example of a steelmaking slag-coated seed according to a first embodiment of the present invention.
[FIG. 2] FIG. 2 is a flow chart showing a process of a method for producing a steelmaking slag-coated seed according to the embodiment.
[FIG. 3] FIG. 3 is a photograph of steelmaking slag-coated seeds of Example 1 of the first embodiment.
[FIG. 4] FIG. 4 is a photograph of iron-coated seeds of Comparative Example 1 of the embodiment.
[FIG. 5] FIG. 5 is photographs showing results of a water soaking experiment of the embodiment.
[FIG. 6] FIG. 6 is photographs showing results of a germination experiment of the embodiment in which soil covering was performed.
[FIG. 7] FIG. 7 is photographs showing results of a germination experiment of the embodiment in which soil covering was not performed.
[FIG. 8] FIG. 8 is photographs showing a state of roots of the embodiment that came out after sowing.
[FIG. 9] FIG. 9 is a photograph showing a state of seeds of the embodiment that were sown by scattering on a paddy field from the air.
[FIG. 10] FIG. 10 is photographs showing growth conditions of rice plants of the embodiment.
[FIG. 11] FIG. 11 is a diagram showing adhered weight in cases of different particle size distributions of the embodiment.
[FIG. 12] FIG. 12 is photographs showing a difference between a coarse grade and a fine grade of steelmaking slag powder of the embodiment.
[FIG. 13] FIG. 13 is a diagram showing adhered weight to seeds in cases of different kinds of slag of the embodiment.
[FIG. 14] FIG. 14 is photographs showing a state of adhesion to seeds in cases of different kinds of slag of the embodiment.
[FIG. 15] FIG. 15 is a graph showing results of Test Example 2 of a second embodiment of the present invention.
[FIG. 16] FIG. 16 is a graph showing results of Test Example 2 of the embodiment.
[FIG. 17] FIG. 17 is a graph showing results of Test Example 3 of the embodiment.
[FIG. 18] FIG. 18 is a graph showing results of Test Example 3 of the embodiment.
[FIG. 19] FIG. 19 is a graph showing results of Test Example 4 of the embodiment.
[FIG. 20] FIG. 20 is a graph showing results of Test Example 5 of the embodiment.

### Description of Embodiments

Hereinafter, (a) preferred embodiment(s) of the present invention will be described in detail with reference to the appended drawings. In this specification and the appended drawings, structural elements that have substantially the same function and structure are denoted with the same reference numerals, and repeated explanation of these structural elements is omitted.

The present invention is a steelmaking slag-coated seed in which a seed is coated using steelmaking slag powder containing specific components. The present invention specifically includes a first embodiment and a second embodiment. In the following, a description is given for each of the first embodiment and the second embodiment separately.

### <1. First embodiment>

A steelmaking slag-coated seed according to the first embodiment of the present invention is a steelmaking slag-coated seed including a seed and a steelmaking slag layer formed on the outside of the seed, in which the steelmaking slag layer is a covering layer made of steelmaking slag powder obtained by pulverizing steelmaking slag, and the steelmaking slag contains 10 mass% or more iron and 30 mass% or more calcium relative to all the components of the steelmaking slag.

In a conventional iron powder-coated seed, it has been necessary to perform mixing with plaster of Paris when performing iron coating treatment because iron powder alone does not cohere favorably. However, iron powder and plaster of Paris are greatly different in specific gravity, and are therefore difficult to uniformly mix together; consequently, there has been a case where non-uniformity occurs in coating or coating iron powder falls off after drying. In this case, the occurrence of floating and damage by birds cannot be sufficiently suppressed, and the yield of rice plants is reduced. Furthermore, after iron coating treatment, a curing period of approximately 5 days is needed in order to alleviate heat generation due to the oxidation reaction of iron. The heat generation has the advantage of causing disease germs growing naturally on the seed to disappear, but on the other hand excessive heat generation may cause quality degradation.

Furthermore, in iron coating direct sowing cultivation, usually the worker (farmer) oneself who performs direct sowing cultivation performs the iron powder coating treatment and the curing on seeds described above; hence, the difficulty of coating and a long curing period are a matter of concern to the worker, and lead to large time and effort.

For materials other than iron, a technology in which steelmaking slag as a material containing minerals is used as a coating material is proposed. However, even in the case where steelmaking slag is used as a coating material, depending on the kind of steelmaking slag (in particular, the components), a sufficient adhered amount is not obtained, the supply of minerals etc. cannot be expected so much, and the occurrence of damage by birds etc. cannot be sufficiently suppressed, either. Furthermore, since steelmaking slag has a smaller specific gravity than iron powder, the weight of the coated seed is reduced when a sufficient adhered amount is not obtained. In this case, it is feared that during aerial scattering the seeds may not get into the soil sufficiently, and floating and damage by birds may occur.

A steelmaking slag-coated seed according to the present embodiment includes a seed and a steelmaking slag layer formed on the outside of the seed, and uses, as steelmaking slag that forms the steelmaking slag layer, a material containing prescribed components among various kinds of steelmaking slag; and can therefore include a sufficient amount of a uniform coating layer (steelmaking slag layer) on the outside of the seed.

Thus, in the present embodiment, since steelmaking slag is used as a coating material, the cost of the source material is greatly suppressed as compared to the case of an iron-coated seed using iron powder or the like as a coating material. Furthermore, a large part of the iron in the steelmaking slag has already been oxidized; thus, as compared to the case of an iron-coated seed, the time of heat generation due to coating treatment is short and a long curing period is not needed, and sowing working can be started in a short period. As a result of these, the steelmaking slag-coated seed of the present embodiment can be produced with less time and effort of the worker and at lower cost than an iron-coated seed.

Furthermore, also minerals such as iron, silicic acid, calcium, manganese, magnesium, and boron dissolved out from the steelmaking slag during the growth period of a rice plant or the like contribute to growth, and therefore the costs of materials etc. for growth are greatly suppressed.

Furthermore, when steelmaking slag powder is used after being finely pulverized to 600 µm or less in advance, seed coating can be performed without using an additional solidifying agent, and the material cost can be reduced. In particular, when powder with a particle size of 45 µm or less is contained at 20% or more, the steelmaking slag powder is fixed to the seed more firmly.

Steelmaking slag can be easily made uniform by simply performing pulverization. Therefore, the powder hardly flies about at the time of performing coating on the seed; thus, a seed covered with a steelmaking slag layer with high uniformity can be obtained.

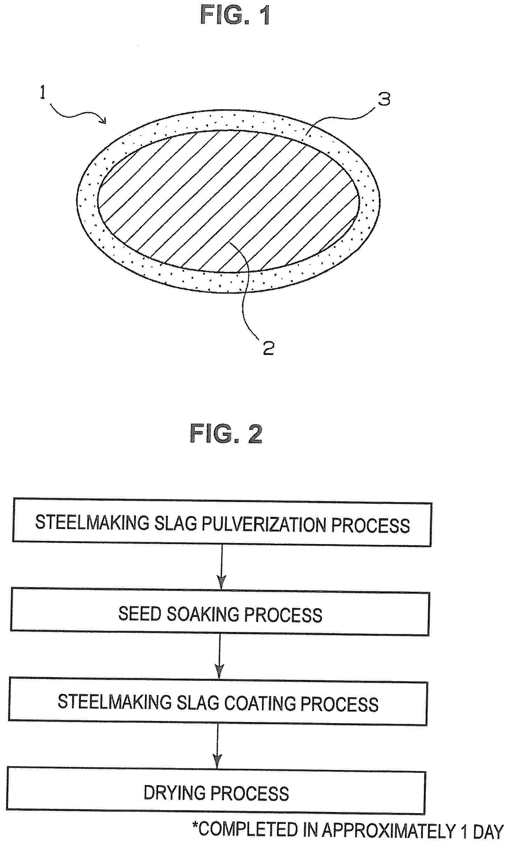

A steelmaking slag-coated seed according to the first embodiment of the present invention will now be specifically described on the basis of FIG. 1. FIG. 1 is a schematic diagram showing an example of the steelmaking slag-coated seed according to the present embodiment. As shown in FIG. 1, a steelmaking slag-coated seed 1 according to the present embodiment includes a seed 2 and a steelmaking slag layer 3. The steelmaking slag layer 3 is a covering layer (coating layer) made of steelmaking slag powder obtained by pulverizing steelmaking slag. In the example shown in FIG. 1, the steelmaking slag layer 3 is formed directly on the surface of the seed 2; but an intermediate layer may be additionally provided between the seed 2 and the steelmaking slag layer 3 to the extent that the object of the present embodiment is not impaired, as necessary.

The seed 2 is not particularly limited as long as it is a seed of a crop for direct sowing cultivation. In the present embodiment, mainly a seed of a rice plant is dealt with. As the kind of the rice plant, the japonica variety, the indica variety, or the like may be used. In the steelmaking slag-coated seed 1 in which the seed 2 is provided with the steelmaking slag layer 3, the specific gravity of the steelmaking slag powder that forms the steelmaking slag layer 3 is higher than the specific gravity of water, and a sufficient amount of steelmaking slag powder is adhered; hence, the capability of the seed to sink into the water is increased. Therefore, the occurrence of floating (floating rice) and damage by birds can be prevented. Furthermore, the steelmaking slag layer 3 formed on the surface of the seed 2 is very hard, and therefore exhibits strong resistance to damage by birds.

The steelmaking slag-coated seed can be used mainly for direct sowing cultivation. The time of performing steelmaking slag coating is not particularly limited as long as it is before performing sowing such as direct sowing. However, since the steelmaking slag-coated seed can be prepared in advance unlike in the case of transplanting cultivation, steelmaking slag coating treatment may be performed in the agricultural off-season during winter, and thereby the time required for a series of working for sowing in spring can be shortened.

The steelmaking slag-coated seed according to the present embodiment is distinctive in that it uses steelmaking slag powder as a material that covers the seed. Steelmaking slag is slag obtained as a by-product in a process that removes impurities from pig iron produced in a blast furnace and adds a secondary material such as quicklime or silica stone to produce steel with high processability; and the components etc. of steelmaking slag vary with the type and process of the steelmaking method. The market selling price of fertilizers processed using steelmaking slag as a source material is 20,000 yen to 50,000 yen per ton, which is much less expensive than the price of iron powder.

In the present embodiment, a kind of steelmaking slag that contains soluble lime as a main component and contains, as other components, iron, soluble silicic acid, soluble magnesia, citric acid-soluble phosphoric acid, citric acid-soluble manganese, citric acid-soluble boron, etc. is used as the steelmaking slag. In particular, steelmaking slag powder containing 10 mass% or more iron and 30 mass% or more calcium is used.

Here, the calcium is derived from soluble lime, which is a main component. A large part of the iron is components that have already been oxidized into diiron trioxide or iron monoxide. The amounts of the components contained in the steelmaking slag, such as calcium and iron, refer to the amount measured on the basis of "Fertilizer Analysis Method (the 1992 edition)" provided by National Institute for Agro-Environmental Sciences, a National Research and Development Agency of Japan. That is, the contained amount of calcium is the contained amount on a CaO basis of the total amount of calcium contained in the steelmaking slag, and the contained amount of iron is the contained amount on a Fe₂O₃ basis of the total amount of iron contained in the steelmaking slag.

By using steelmaking slag of such components among various kinds of steelmaking slag, a sufficient amount of a uniform coating layer (steelmaking slag layer) can be formed on the outside of the seed. As a more preferred component range, the steelmaking slag contains 10 mass% to 30 mass% iron and 30 mass% to 50 mass% calcium relative to all the components of the steelmaking slag.

It is preferable that, while the component range mentioned above (10 mass% or more iron and 30 mass% or more calcium) is satisfied, the weight of calcium be within 5 times the weight of iron, and it is more preferable that the weight of calcium be within twice the weight of iron. The adhered weight and the adhered volume of steelmaking slag can be increased by setting the amount of iron as large as possible while ensuring a certain amount of calcium, which is a lime component and contributes to the adhesiveness of the steelmaking slag powder to the seed.

Furthermore, the seed is provided with various effects by other components contained in the steelmaking slag. Specifically, by soluble silicic acid being contained, the leaves and the stem become robust and less likely to lodge; consequently, the light reception condition is improved, and the percentage of ripened seeds is increased. Further, by citric acid-soluble phosphoric acid being contained, the formation of cytoplasm is promoted and root spread is improved, and the rice plant becomes robust. Further, by citric acid-soluble manganese being contained in addition to iron, hydrogen sulfide gas, which is a substance likely to induce the root rot and autumn decline of the rice plant, can be chemically reacted into harmless substances. Further, by citric acid-soluble manganese and citric acid-soluble boron being contained, the rice plant becomes less likely to experience trace element deficiency. Further, by soluble lime being contained, the acidity of the soil is eased, and the development of roots is promoted. Further, by soluble magnesia being contained, the amount of chlorophyll is increased and photosynthesis is promoted, and thus the amount of carbohydrates produced is increased; furthermore, the bonding between citric acid-soluble phosphoric acid and iron is prevented and the absorption of the citric acid-soluble phosphoric acid is facilitated, and thus root spread is improved and accordingly the amount of soluble lime absorbed is improved.

The particle size of the steelmaking slag powder is preferably 600 µm or less. By setting the particle size of the steelmaking slag powder within the range mentioned above (the maximum particle size being 600 µm), even when an additional solidifying agent is not used, the surface of the seed of a rice plant or the like can be easily provided with a coating. It is preferable that steelmaking slag powder with a particle size of 45 µm or less be contained at 20% or more. More preferably, the contained amount is 35% or more. By using such a fine powder, it becomes easy for the steelmaking slag powder to be fixed to the seed more firmly.

The density of the steelmaking slag powder is not particularly limited, but is usually larger than the density of water, and is approximately 1.3 to 2.5 g/cm³ in terms of bulk density. Although the density is smaller than the density of iron powder, the adhered volume is larger than the adhered volume of conventional iron coatings (iron powder + plaster of Paris). Thus, a sufficient weight increase can be achieved and the capability to sink into the water can be increased, and floating etc. can be prevented.

A method for producing a steelmaking slag-coated seed according to the present embodiment will now be described. As shown in FIG. 2, the method for producing a steelmaking slag-coated seed according to the present embodiment includes (1) a steelmaking slag pulverization process, (2) a seed soaking process, (3) a steelmaking slag coating process, and (4) a drying process. Each process will now be described.

### (1) Steelmaking slag pulverization process

This process is a process that pulverizes, as steelmaking slag serving as a material of the steelmaking slag layer, steelmaking slag containing 10 mass% or more iron and 30 mass% or more calcium relative to all the components of the steelmaking slag into powder. The pulverization is performed by first coarsely pulverizing steelmaking slag carried in from a steel mill and then finely pulverizing the coarsely pulverized steelmaking slag. The preferred ranges of the particle size etc. of the steelmaking slag powder after pulverization are as described above. A ball mill is preferably used in the fine pulverization. This is because a ball mill is used mainly in a dry system and can perform finer pulverization than a dry autogenous mill and the like, and makes it easy to obtain the particle system range described above.

### (2) Seed soaking process

This process is a process that incorporates water into a seed before coating. First, seeds are put into a net bag. Then, the net bag containing seeds is soaked one whole day and night in a container containing a sufficient amount of water. After the soaking is finished, the net bag is extracted from the container, and the water is removed. The water removal is performed by putting the net bag mentioned above on a pallet and allowing it to stand until water dripping stops, or by hanging the net bag mentioned above and allowing it to stand until water dripping stops. Thereby, the sprout of the seed wakes easily, and it becomes easy for the steelmaking slag powder to adhere to the surface of the seed. When performing seed soaking treatment in the winter season, warming may be performed for a prescribed time using a germination hastening device.

### (3) Steelmaking slag coating process

This process is a process that mixes the steelmaking slag powder obtained in the steelmaking slag pulverization process and the seed obtained in the seed soaking process and forms a coating layer made of steelmaking slag powder (a steelmaking slag layer) on the surface of the seed. In the coating, a coating machine equipped with a drum container or a concrete mixer may be used. The coating machine equipped with a drum container includes, on an upper part of a support body, a drum that is inclined by a prescribed angle and a control apparatus that rotates the drum. The concrete mixer includes, on an upper part of a support body, a tank that is inclined by a prescribed angle and a control apparatus that rotates the tank. Commercially available articles may be used for both the coating machine and the concrete mixer used.

In the case of using either of them, first, seeds that have undergone seed soaking treatment are introduced into the drum or the tank. Then, steelmaking slag powder is introduced while the drum or the tank is rotated. Further, water is sprayed using a spray while the rotation is continued. The working of the steelmaking slag powder introduction and the water spraying is repeated several times. Thereby, steelmaking slag powder adheres to and forms a coating on the surface of the seed. Since the coating material is fine-made steelmaking slag powder alone, there is no case where powder flies about during coating like in the case of iron powder and plaster of Paris, and a coating layer with high uniformity can be easily formed regardless of the level of skill of the worker etc.

### (4) Drying process

This process is a process that dries the seed on which a steelmaking slag layer made of steelmaking slag powder is formed. The rotation of the drum or the tank is stopped, and the coated seeds are thinly spread and dried. By thinly spreading the seeds, the oxidation of some amount of iron remaining on the steelmaking slag layer of the coated seed can be promoted, and heat radiation can be facilitated and the degradation of the seed due to the trapping of heat can be prevented. Natural drying may be performed as the drying method, with no need of devices etc.; and approximately 1 day is sufficient as the drying and curing time.

The reason why the drying and curing time can be shortened from 5 days in the case of iron coating to approximately 1 day is that a large part of the iron contained in the steelmaking slag has already been oxidized and therefore only little heat is generated, and there is no need to alleviate heat generation due to the oxidation reaction of iron. In those cases where direct sowing is performed immediately, the drying process itself may be omitted.

As another process, an intermediate layer formation process that forms an intermediate layer containing iron powder and plaster of Paris between the seed and the steelmaking slag layer may be provided between (2) the seed soaking process and (3) the steelmaking slag coating process. By providing an intermediate layer, the falling-off of the steelmaking slag layer can be suppressed. The apparatus used for the intermediate layer formation process may be an apparatus similar to those used in the steelmaking slag coating process described above.

With the steelmaking slag-coated seed thus obtained, rice plants can be cultivated by substantially the same process as a common direct sowing cultivation method for iron-coated seeds.

### <2. Second embodiment>

In a steelmaking slag-coated seed according to the second embodiment of the present invention, a seed is covered with steelmaking slag powder containing 25 mass% or more and 50 mass% or less CaO and 8 mass% or more and 30 mass% or less SiO₂.

In order to enable direct sowing of seeds, various technologies of covering a seed with iron powder have so far been reported. However, in these technologies, there has been a problem that seed covering using iron powder involves some cost for metal iron powder.

Furthermore, in seed covering using iron powder or triiron tetroxide, there has been also a problem that the element from which a fertilizer effect can be expected is only iron.

Furthermore, fine iron powder with a minute particle size such as for use in seed covering has had also a problem that it requires attention to ignition, dust explosion, and the like, and involves some cost for safety measures when the general farmer handles it.

In view of the problems mentioned above, the present inventors conducted extensive studies of using, as a coating material of a seed, steel slag, which is produced as a by-product in a steel production process and which is relatively low in material cost, has a fertilizer effect, and is usable as a covering material. Conventionally, neutral materials such as iron powder have been used as covering materials of a seed, and materials with strong alkalinity have been considered not suitable for covering materials of a seed; but the present inventors have found that a seed can be germinated also by using a certain kind of steelmaking slag, although it has alkalinity with a pH of approximately 11, as a covering material of the seed. The present inventors have found that the growth of a plant can be promoted by using such steelmaking slag as a covering material by virtue of minerals supplied from the steelmaking slag.

That is, the steelmaking slag-coated seed according to the present embodiment has been thought up on the basis of the findings mentioned above, and can suppress the material cost as compared to conventional coated seeds covered with metal iron powder or iron oxide. Furthermore, the steelmaking slag-coated seed according to the present embodiment has a fertilizer effect, and can be directly sown.

### [With regard to steelmaking slag powder]

Next, steelmaking slag powder used for covering in the steelmaking slag-coated seed according to the second embodiment of the present invention is described in detail.

Steelmaking slag is produced in a large amount as a by-product in the ironmaking industry, and the composition of steelmaking slag is analyzed and managed. Steelmaking slag contains various fertilizer-effective elements such as Ca, Si, Mg, Mn, Fe, and P, and is used as a fertilizer source material. In Japan, as fertilizers using steelmaking slag as a source material, there are fertilizers falling under the standards of the slag silicate fertilizer, the slag phosphate fertilizer, the by-product lime fertilizer, and the special fertilizer (the iron-containing substance) provided by Fertilizers Regulation Act. Approximately 10 million tons of steelmaking slag is produced per year in Japan alone, and steelmaking slag can be obtained inexpensively.

Steelmaking slag is a material that has no fear of ignition or dust explosion and is inexpensive as compared to iron powder, and has been conventionally used for fertilizer uses as well.

In the present embodiment, examples of the steelmaking slag used for the covering of a seed include, as well as steelmaking slag containing prescribed components like that described in detail below, dephosphorization slag, decarburization slag, and the like, which are kinds of steelmaking slag produced as a by-product from a steel production process. Dephosphorization slag is slag containing phosphorus that is produced as a by-product by adding lime, iron oxide, or the like as a dephosphorizing agent to molten iron and blowing a gas such as oxygen into the material in order to remove phosphorus contained in the molten iron, and is a kind of steelmaking slag. Decarburization slag is slag that is produced as a by-product by blowing oxygen into molten iron in order to remove carbon contained in the molten iron to make steel, and is a kind of steelmaking slag.

Any other kind of steelmaking slag than the above kinds may be used as long as it satisfies the composition of the steelmaking slag used for the covering of a seed in the present embodiment, as a matter of course. For example, as well as steelmaking slag like that described in detail below containing prescribed amounts of components, steelmaking slag with a high magnesium content produced during the repair of refractories or the like may be used.

In the present embodiment, steelmaking slag powder obtained by adjusting steelmaking slag, dephosphorization slag, or decarburization slag to an appropriate particle size by pulverization or the like may be used as it is as the steelmaking slag used for the covering of a seed. For the pulverization of these kinds of slag, for example, known means such as a jaw crusher, a hammer crusher, a rod mill, a ball mill, a roll mill, and a roller mill may be used.

In the present embodiment, the particle size of the steelmaking slag, the dephosphorization slag, or the decarburization slag used for the covering of a seed is not particularly limited as long as a seed can be covered by the solidification of the slag; but it can be said that a finer particle size is preferable because the solidification is easier. In particular, slag with a particle size adjusted to less than 600 µm tends to have greater adhesiveness to a seed, and has a higher effect. Thus, all the particle sizes of the steelmaking slag, the dephosphorization slag, and the decarburization slag used for the steelmaking slag-coated seed according to the present embodiment are preferably adjusted to less than 600 µm. All the particle sizes can be set to less than 600 µm by, for example, sieving the slag used for the covering of a seed. Although slag having as fine a particle size as possible is preferable in terms of increasing the adhesiveness to a seed as a matter of course, excessive fine-making is not necessary because the pulverization and classification require cost and time.

### [With regard to steelmaking slag containing prescribed components]

The composition of the steelmaking slag that covers a seed in the present embodiment will now be described in detail. Steelmaking slag containing prescribed amounts of components that is used in the present embodiment contains prescribed amounts of various components such as Ca, Si, Mg, Mn, Fe, and P, as mentioned above.

### (CaO: 25 mass% to 50 mass%)

First, Ca is described. When steelmaking slag comes into contact with water, Ca, and Si and Al described later are dissolved out and chemically bonded, and thereby the steelmaking slag exhibits hydraulicity. In the present embodiment, steelmaking slag is adhered to a seed and is solidified by utilizing the hydraulicity, and thus the seed is covered. Therefore, Ca is an important element. Ca is also a fertilizer element essential to a plant. When the contained amount of Ca is written in a fertilizer or steelmaking slag, the contained amount is written on the basis of an oxide of CaO; thus, hereinafter the contained amount of Ca is shown as CaO.

In the present embodiment, in the case where the contained amount of CaO of the steelmaking slag used for the covering of a seed is less than 25 mass%, there is a possibility that a sufficient amount of Ca to exhibit hydraulicity cannot be dissolved out. On the other hand, steelmaking slag in which the contained amount of CaO is more than 50 mass% is not produced in a normal ironmaking process, and is difficult to obtain. In the present embodiment, it is preferable that the steelmaking slag used for the covering of a seed be able to be stably supplied in a large amount, and the steelmaking slag is preferably steelmaking slag produced in a normal ironmaking process. Thus, in the present embodiment, the contained amount of CaO of the steelmaking slag used for the covering of a seed is set to 25 mass% or more and 50 mass% or less. The contained amount of CaO of the steelmaking slag is preferably 38 mass% or more and 50 mass% or less.

The contained amount of CaO can be measured by, for example, the X-ray fluorescence analysis method.

### (SiO₂: 8 mass% to 30 mass%)

Next, Si is described. Si is an element contributing to the hydraulicity of steelmaking slag, along with Ca and Al. Therefore, also Si is an important element. Si is not an essential element of a plant, but is a very important fertilizer-effect element to a rice plant. Silicic acid (SiO₂) accounts for approximately 5% of the dry weight of the plant body of a rice plant. In a fertilizer and steelmaking slag, when the contained amount of Si is written, the contained amount is written on the basis of an oxide of SiO₂; thus, hereinafter the contained amount of Si is shown as SiO₂.

In the present embodiment, in the case where the contained amount of SiO₂ of the steelmaking slag used for the covering of a seed is less than 10 mass%, there is a possibility that a sufficient amount of Si to exhibit hydraulicity cannot be dissolved out. On the other hand, steelmaking slag in which the contained amount of SiO₂ is more than 30 mass% is not produced in a normal steelmaking process, and is difficult to obtain. In the present embodiment, it is preferable that the steelmaking slag used for the covering of a seed be able to be stably supplied in a large amount, and the steelmaking slag is preferably steelmaking slag produced in a normal steelmaking process. Thus, in the present embodiment, the contained amount of SiO₂ of the steelmaking slag used for the covering of a seed is set to 10 mass% or more and 30 mass% or less.

The contained amount of SiO₂ can be measured by, for example, the X-ray fluorescence analysis method.

### (MgO: 1 mass% to 20 mass%)

Next, Mg is described. In general, the contained amount of MgO of steelmaking slag is a value well below the contained amount of CaO. This is due to the fact that steelmaking slag is slag produced by adding mainly lime to molten iron. Mg contained in steelmaking slag is derived mainly from Mg dissolved out from firebricks of the furnace wall of a converter. Mg is an element related to the hydraulicity of steelmaking slag, along with Ca, Si, and Al. However, the contribution of Mg to hydraulicity is smaller than that of Ca in view of the difference between the amount of CaO and the amount of MgO contained in steelmaking slag, etc. In the present embodiment, since the steelmaking slag used for the covering of a seed contains 25 mass% or more CaO, it is presumed that hydraulicity can be basically provided by CaO contained in the steelmaking slag. However, by the further existence of MgO, it can be expected that hydraulicity will be exhibited better. In a fertilizer and steelmaking slag, when the contained amount of Mg is written, the contained amount is written on the basis of an oxide of MgO; thus, hereinafter the contained amount of Mg is shown as MgO.

Here, steelmaking slag in which the contained amount of MgO is less than 1 mass% is not produced in a normal ironmaking process. On the other hand, in steelmaking slag produced on the occasion of the repair of refractories of a converter, slag in which the contained amount of MgO is nearly 20% is produced. However, steelmaking slag in which the contained amount of MgO is more than 20% is not produced. In the present embodiment, it is preferable that the steelmaking slag used for the covering of a seed be able to be stably supplied in a large amount, and the steelmaking slag is preferably steelmaking slag produced in a normal steelmaking process. Thus, in the present embodiment, the contained amount of MgO of the steelmaking slag used for the covering of a seed is preferably 1 mass% or more and 20 mass% or less. The contained amount of MgO of the steelmaking slag is more preferably 3 mass% or more and 10 mass% or less.

The contained amount of MgO can be measured by, for example, the X-ray fluorescence analysis method.

### (Al₂O₃: 1 mass% to 25 mass%)

Next, Al is described. Al is an important element for the hydraulicity of steelmaking slag, along with Ca and Si. In a fertilizer and steelmaking slag, when the contained amount of Al is written, the contained amount is written on the basis of an oxide of Al₂O₃; thus, hereinafter the contained amount of Al is shown as Al₂O₃.

Steelmaking slag in which the contained amount of Al₂O₃ is less than 1 mass% and steelmaking slag in which the contained amount of Al₂O₃ is more than 25 mass% are not produced in a normal ironmaking process, and are difficult to obtain. In the present embodiment, it is preferable that the steelmaking slag used for the covering of a seed be able to be stably supplied in a large amount, and the steelmaking slag is preferably steelmaking slag produced in a normal steelmaking process. When the contained amount of Al₂O₃ of the steelmaking slag is 1 mass% or more, Al can exhibit hydraulicity along with Ca and Si. Thus, in the present embodiment, the contained amount of Al₂O₃ of the steelmaking slag used for the covering of a seed is preferably 1 mass% or more and 25 mass% or less. However, in the case where it is desired to enhance hydraulicity more to promote solidification, the contained amount of Al₂O₃ of the steelmaking slag used for the covering of a seed in the present embodiment is more preferably 10 mass% or more and 25 mass% or less.

The contained amount of Al₂O₃ can be measured by, for example, the X-ray fluorescence analysis method.

### (Fe: 5 mass% to 35 mass%)

Next, Fe is described. Fe is an element unavoidably contained in steelmaking slag. Fe is not an essential element of a plant; but as can be seen from the fact that the special fertilizer provided by Fertilizers Regulation Act of Japan includes iron-containing substances, also iron is an element effective for a plant. Here, the amount of Fe contained in the steelmaking slag is the contained amount of Fe as the element, and is the sum total of the contained amounts of the Fe element in various existence forms such as metal iron, FeO, and Fe₂O₃. Steelmaking slag in which the contained amount of Fe is less than 5 mass% and steelmaking slag in which the contained amount of Fe is more than 35 mass% are not produced in a normal ironmaking process, and are difficult to obtain. In the present embodiment, it is preferable that the steelmaking slag used for the covering of a seed be able to be stably supplied in a large amount, and the steelmaking slag is preferably steelmaking slag produced in a normal steelmaking process. Thus, in the present embodiment, the contained amount of Fe of the steelmaking slag used for the covering of a seed is preferably 5 mass% or more and 35 mass% or less. The contained amount of Fe of the steelmaking slag is more preferably 10 mass% or more and 25 mass% or less.

The contained amount of Fe can be measured by, for example, the X-ray fluorescence analysis method.

### (Mn: 1 mass% to 8 mass%)

Next, Mn is described. Mn is an element having a fertilizer effect on a plant. Steelmaking slag in which the contained amount of Mn is less than 1 mass% and steelmaking slag in which the contained amount of Mn is more than 8 mass% are not produced in a normal ironmaking process, and are difficult to obtain. In the present embodiment, it is preferable that the steelmaking slag used for the covering of a seed be able to be stably supplied in a large amount, and the steelmaking slag is preferably steelmaking slag produced in a normal steelmaking process. Thus, in the present embodiment, the contained amount of Mn of the steelmaking slag used for the covering of a seed is preferably 1 mass% or more and 8 mass% or less.

The contained amount of Mn can be measured by, for example, the X-ray fluorescence analysis method.

### (P₂O₅: 0.1 mass% to 5 mass%)

Next, P is described. P is an essential element of a plant. In a fertilizer and steelmaking slag, when the contained amount of P is written, the contained amount is written on the basis of an oxide of P₂O₅; thus, also for the steelmaking slag used for the covering of a seed in the present embodiment, the contained amount is shown as P₂O₅. P is an element that acts on the growing point of roots and has effect for the growth of roots. If P runs short, the growth of roots is suppressed. However, steelmaking slag in which the contained amount of P₂O₅ is less than 0.1 mass% and steelmaking slag in which the contained amount of P₂O₅ is more than 5 mass% are not produced in a normal ironmaking process, and are difficult to obtain. In the present embodiment, it is preferable that the steelmaking slag used for the covering of a seed be able to be stably supplied in a large amount, and the steelmaking slag is preferably steelmaking slag produced in a normal steelmaking process. Thus, in the present embodiment, the contained amount of P₂O₅ of the steelmaking slag used for the covering of a seed is preferably 0.1 mass% or more and 5 mass% or less.

The contained amount of P₂O₅ can be measured by, for example, the X-ray fluorescence analysis method.

Thus, in the present embodiment, the composition of the steelmaking slag used for the covering of a seed is at least a composition in which the contained amount of CaO is 25 mass% or more and 50 mass% or less and the contained amount of SiO₂ is 10 mass% or more and 30 mass% or less. The composition of the steelmaking slag is preferably a composition in which, in addition to the CaO and the SiO₂ mentioned above, the contained amount of MgO is 1 mass% or more and 20 mass% or less, the contained amount of Al₂O₃ is 1 mass% or more and 25 mass% or less, the contained amount of Fe is 5 mass% or more and 35 mass% or less, the contained amount of Mn is 1 mass% or more and 8 mass% or less, and the contained amount of P₂O₅ is 0.1 mass% or more and 5 mass% or less.

Although the composition of the steelmaking slag contains 25 mass% or more and 50 mass% or less CaO and is alkaline, a seed covered with the steelmaking slag can germinate. It is known that true grasses secrete an acidic substance capable of chelating an iron ion, such as mugineic acid, from roots. Therefore, in the case where the seed to be covered with steelmaking slag is a rice seed, the acidic substance mentioned above is secreted from the radicle of the rice seed during germination, and alkalis derived from the steelmaking slag that has covered the seed can be neutralized. Hence, the seed to be covered with steelmaking slag is preferably a rice seed. In such a case, iron etc. contained in the steelmaking slag are chelated as an iron ion by the secretion of the acidic substance, and therefore it becomes easy for the seed to absorb these components from the radicle.

### (With regard to dephosphorization slag and decarburization slag)

Also dephosphorization slag and decarburization slag contain similar components to the steelmaking slag containing prescribed amounts of components mentioned above; but the contained amounts may be different from the contained amounts of components in the steelmaking slag mentioned above. However, any kind of dephosphorization slag or decarburization slag may be used as slag for covering a seed in the present embodiment even when there is a component in a different contained amount from the steelmaking slag containing prescribed amounts of components mentioned above.

### [Method for measuring contained amount of each component in steelmaking slag]

As described above, in the present embodiment, the contained amount of each component in various kinds of slag used for the covering of a seed can be measured by the X-ray fluorescence analysis method. More specifically, the peak intensities of fluorescent X-rays related to a focused-on component are measured in advance using a standard sample in which the contained amount of the focused-on component is known, and thereby a calibration curve is created. For a sample in which the contained amount is unknown, the contained amount of a focused-on component can be identified by measuring the peak intensities of fluorescent X-rays related to the focused-on component and using a calibration curve created in advance.

The peaks of fluorescent X-rays that are focused on are not particularly limited; for example, the peaks of fluorescent X-rays of Ca, Si, Mg, Al, Fe, Mn, and P may be focused on.

The method for measuring the contained amount of each component in various kinds of slag is not limited to an X-ray fluorescence analysis method like that mentioned above, and other known analysis methods may be used as appropriate.

### [With regard to seed]

Next, the seed usable in the steelmaking slag-coated seed according to the present embodiment is briefly described. The kind of the seed usable in the steelmaking slag-coated seed according to the present embodiment is not particularly limited; for example, any kind of seed, such as a seed of a plant falling under Oryza in the grass family, may be used.

### [With regard to method for producing steelmaking slag-coated seed]

Next, a method for producing a steelmaking slag-coated seed using steelmaking slag, dephosphorization slag, or decarburization slag like that described above is described in detail.

The seed to be covered with steelmaking slag, dephosphorization slag, or decarburization slag may be, for example, a rice seed also called seed rice. The steelmaking slag, the dephosphorization slag, or the decarburization slag used for the covering of a seed has the property of solidifying by being mixed with water. For the mixing ratio of water added to the steelmaking slag, the dephosphorization slag, or the decarburization slag, it is preferable that the mass ratio of water in the mixture of the slag mentioned above and water (that is, the mass ratio of water to the total mass of the mixture) be 10 mass% or more and 80 mass% or less. In the case where the mass ratio of water in the mixture of the slag mentioned above and water is less than 10 mass%, the adhesiveness of the slag mentioned above to the surface of the seed is worsened, and the possibility that covering will be difficult is increased. On the other hand, in the case where the mass ratio of water in the mixture of the slag mentioned above and water is more than 80 mass%, the ratio of water is too high, and therefore the possibility that the surface of the seed cannot be covered with the slag mentioned above is increased. Thus, the mass ratio of water in the mixture of the slag mentioned above and water is preferably 10 mass% or more and 80 mass% or less. In order to stably perform seed covering using steelmaking slag with success, the mass ratio of water is more preferably 25 mass% or more and 50% mass or less.

Next, a method for covering a seed with a mixture in which steelmaking slag, dephosphorization slag, or decarburization slag is mixed with water is described. A seed can be covered by preparing a mixture in which the slag mentioned above is mixed with water in advance and mixing the mixture and the seed. Alternatively, a seed may be covered with the slag mentioned above by mixing the slag mentioned above, the seed, and water together. The method of mixing may be any method. In the case where a large amount is treated, seeds may be covered with the slag mentioned above by, for example, mixing using a rotary granulator.

The seed covered with steelmaking slag, dephosphorization slag, or decarburization slag is extracted and used. The amount of covering with the slag mentioned above is not particularly limited. It is preferable that, assuming that the mass of the seed is 1, the seed be covered using a mass of approximately 0.1 to 2 of the slag mentioned above. In general, the amount of covering yielded by merely mixing a seed with a mixture of slag and water falls within the range mentioned above. However, in the case where slag does not cover the entire surface of a seed, it is preferable that the seed be mixed with a mixture of the slag and water again.

In order to enhance the solidification of the slag mentioned above, it is also effective to add blast furnace slag fine powder or calcium sulfate to steelmaking slag, dephosphorization slag, or decarburization slag, a mixture of steelmaking slag, dephosphorization slag, or decarburization slag, and water, or a mixture of steelmaking slag, dephosphorization slag, or decarburization slag, water, and a seed.

At the time of covering a seed with steelmaking slag, a phenomenon in which the stickiness of the covering substance to the surface of the seed is weakened may occur due to bristles existing on the surface of the seed. As a measure to solve the phenomenon, a method in which the seed is soaked in a starch aqueous solution and is then covered with steelmaking slag is given. By such treatment, the stickiness of the covering substance can be increased. The concentration of the starch aqueous solution (that is, the mass ratio of starch to the total mass of the aqueous solution) is preferably 40 mass% to 80 mass%. By soaking the seed in a starch aqueous solution and then covering the seed with steelmaking slag, the ratio between the mass of one rice seed and the mass of the covering substance can be increased to approximately 1:0.6 to 1:2.

The seed covered with steelmaking slag may be further covered with gypsum from the outside. By covering the seed twice using steelmaking slag and gypsum, the stickiness of the covering of steelmaking slag to the seed can be enhanced. The method of covering a seed covered with steelmaking slag with gypsum from the outside may be, for example, a method in which a steelmaking slag-coated seed obtained by being covered with steelmaking slag and dried is soaked in an aqueous suspension of gypsum and is extracted, and drying is performed at room temperature. The concentration of the aqueous suspension of gypsum is preferably 20 mass% to 60 mass%, for example.

It is also possible to cover a seed with a mixture of steelmaking slag, and gypsum and/or iron powder. In the case where the steelmaking slag used for the covering of a seed runs short, gypsum may be used as a supplementary material for the lack of the steelmaking slag. In this case, a material obtained by mixing gypsum with steelmaking slag is used. Iron powder has a large specific gravity, and therefore has the effect of increasing the weight of the steelmaking slag-coated seed and making it less likely for the seed to run off in the paddy field. In the case where a seed is covered with a mixture of steelmaking slag, and gypsum and/or iron powder, the seed can be covered by mixing steelmaking slag, and gypsum and/or iron powder in advance, soaking the seed in a suspension in which water is added, then extracting the seed, and performing drying at room temperature.

In the case where gypsum is added to steelmaking slag, the ratio of gypsum to steelmaking slag is preferably 20 mass% or less. If the ratio of gypsum added to steelmaking slag is more than 20 mass%, the ratio of gypsum is too high, and therefore the germination rate may be reduced. Also in the case where iron powder is added to steelmaking slag, the mass ratio of iron powder to steelmaking slag is preferably 50 mass% or less. This is because, if the ratio of iron powder is more than 50 mass%, a divalent iron ion dissolved out from the iron powder is oxidized into a trivalent iron ion and becomes acidic when it is deposited as a hydroxide; and this may adversely affect germination and the growth of the radicle. Furthermore, this is because iron powder is expensive and hence a high ratio of iron powder is disadvantageous in terms of cost.

In the case where a seed is covered with a mixture of steelmaking slag, and gypsum and/or iron powder, the seed is covered using a mixture in which water is added to a mixture of steelmaking slag, and gypsum and/or iron powder; here, the mass ratio of water in that mixture (the mass ratio of water to the total mass of that mixture) is preferably 10 mass% or more and 80 mass% or less. In the case where the mass ratio of water is less than 10 mass%, the adhesiveness of the mixture of steelmaking slag, and gypsum and/or iron powder to the surface of the seed is worsened, and the possibility that covering will be difficult is increased. On the other hand, in the case where the mass ratio of water in the mixture of a mixture of steelmaking slag, and gypsum and/or iron powder, and water is more than 80 mass%, the ratio of water is too high, and therefore the possibility that the surface of the seed cannot be covered with the mixture of steelmaking slag, and gypsum and/or iron powder is increased. Thus, the mass ratio of water in the mixture of a mixture of steelmaking slag, and gypsum and/or iron powder, and water is preferably 10 mass% or more and 80 mass% or less. In order to stably perform seed covering using a mixture of steelmaking slag, and gypsum and/or iron powder with success, the mass ratio of water is more preferably 25 mass% or more and 50% mass or less.

### [With regard to water used during production of steelmaking slag-coated seed]

As the water mixed with steelmaking slag or a mixture of steelmaking slag and gypsum at the time of covering a seed with the steelmaking slag or the mixture of steelmaking slag and gypsum, not only pure water but also tap water, ground water, agricultural water, etc. may be used; but it is preferable to use water containing molasses. Molasses is a blackish brown liquid produced as a by-product when sugar is refined from the squeezed juice of sugarcanes or the like; and contains approximately 70 to 80% sugar, and contains also minerals and vitamins. In particular, molasses contains approximately 2% potassium, which is necessary for the cell growth of a plant. Potassium is a component that is absorbed from roots of a plant and is necessary for the growth of plant cells. Thus, by using water containing molasses when producing a steelmaking slag-coated seed, also potassium derived from the molasses can be supplied from the covering substance of the seed, and it can also be expected to further promote the growth of the seedling.

Molasses can be obtained inexpensively because it is a by-product. By using water containing molasses, the solidification of the covering substance and the stability of the adhesion of the covering substance to the seed can be reinforced by utilizing the glutinosity of the molasses, and components contained in the molasses can further promote the growth of the radicle after germination, in addition to the fertilizer effect by steelmaking slag.

In the case where the mass ratio of molasses contained in the water containing molasses is less than 10 mass% relative to the total mass, it is difficult to clearly exhibit the effect of reinforcing the solidification and the stability of the adhesion to the seed of the seed-covering substance made of steelmaking slag or a mixture of steelmaking slag and gypsum. On the other hand, in the case where the mass ratio of molasses contained in the water containing molasses is more than 50 mass% relative to the total mass, when steelmaking slag or a mixture of steelmaking slag and gypsum, and the water containing molasses are mixed together, the steelmaking slag or the mixture of steelmaking slag and gypsum becomes lumps, and becomes less likely to adhere to the seed. Thus, the mass ratio of molasses contained in the water containing molasses is preferably 10 mass% or more and 50 mass% or less relative to the total mass.

### [With regard to treatment on steelmaking slag-coated seed using sodium alginate aqueous solution]

Sodium alginate is a kind of polysaccharide contained in a brown alga or the like, which is an alga. Sodium alginate has the property of turning into a gel when Ca or Mg is added to an aqueous solution of sodium alginate. Steelmaking slag contains Ca and Mg, and gypsum contains Ca; therefore, gelation occurs by adding a sodium alginate aqueous solution to the surface of steelmaking slag or a mixture of steelmaking slag and gypsum, and it becomes possible to reinforce the stability of the adhesion of the seed-covering substance made of steelmaking slag, or steelmaking slag and gypsum to the seed. When a steelmaking slag-coated seed produced using sodium alginate is directly sown on the soil, the alginic acid is decomposed by the action of soil microorganisms to form an alginate oligosaccharide. The alginate oligosaccharide has the effect of binding to minerals contained in the steelmaking slag of the covering substance and helping mineral absorption into plant roots, and can be expected to exhibit the effect of promoting the growth of the seedling after germination.

Examples of the method for adding a sodium alginate aqueous solution to the surface of the seed-covering substance include a method in which a sodium alginate aqueous solution is sprayed or sprinkled on the surface of the seed covered with steelmaking slag, or steelmaking slag and gypsum, and the like. It is also possible to perform a method such as immersing a seed covered with steelmaking slag, or steelmaking slag and gypsum in a sodium alginate aqueous solution for a short time while paying attention so that the covering substance does not peel off. In the case where the concentration of the sodium alginate aqueous solution is less than 0.5 mass% relative to the total mass of the aqueous solution, the concentration of sodium alginate is too low, and therefore gelation does not occur properly; consequently, the effect of reinforcing the stability of the adhesion of the covering substance to the seed may not be exhibited. In the case where the concentration of the sodium alginate aqueous solution is more than 5 mass% relative to the total mass of the aqueous solution, the gel may become too strong and suppress germination. Thus, the concentration of the sodium alginate aqueous solution to be added to the surface of the seed-covering substance made of steelmaking slag, or steelmaking slag and gypsum is preferably 0.5 mass% or more and 5 mass% or less relative to the total mass of the aqueous solution. The amount of the sodium alginate aqueous solution in the case where the sodium alginate aqueous solution is added by spraying or sprinkling may be such an amount that the entire surface of the seed-covering substance is wetted.

The seed covered with steelmaking slag, dephosphorization slag, or decarburization slag can be used for direct sowing after it is air-dried in a well-ventilated place or the like, for example. Since performing covering worsens air permeability and suppresses the breathing of the seed, it is preferable that sowing be performed at as early a time as possible after covering. Sowing is preferably performed within 4 days after covering, if possible.

However, the steelmaking slag-coated seed may be stored up to approximately a half year after covering, and can be used for direct sowing.

In the above description, the composition of the steelmaking slag is shown as the composition before mixing with water. To find the composition of the steelmaking slag after mixing with water, the steelmaking slag may be collected in a dry state after water is vaporized, and the composition of the collected steelmaking slag may be investigated. Thus, there is little change between the component composition of the steelmaking slag before covering and the component composition of the steelmaking slag after covering.

In the above manner, a covered seed can be produced simply and inexpensively using steelmaking slag, dephosphorization slag, or decarburization slag. The steelmaking slag-coated seed thus produced can be used for direct sowing, and the efficiency and productivity of rice cultivation can be enhanced.

### [Examples]

### <Examples corresponding to first embodiment>

In the following, first, Examples corresponding to the first embodiment of the present invention are described, along with Comparative Examples. However, the technical scope of the present embodiment is not limited to Examples described below.

As Example 1, using rice seeds (variety: Koshihikari), a pulverization process, a seed soaking process, a steelmaking slag coating process, and a drying process were sequentially performed by the procedure shown in FIG. 2 to provide the seed with a steelmaking slag coating. A coating machine was used in the steelmaking slag coating process. The steelmaking slag-coated seed of Example 1 has a structure in which the surface of the seed is covered with steelmaking slag powder. The component ratio of the steelmaking slag powder used is shown in Table 1, and the pH and the specific gravity are shown in Table 2. The particle size distribution of the steelmaking slag powder used is of "the medium grade" shown in Tables 4 to 7 described later.

As Comparative Example 1, using rice seeds of the same variety, a seed soaking process, an iron coating process, a finish layer coating process, and an oxidation and drying process were sequentially performed to provide the seed with an iron coating. A similar apparatus to the apparatus of Example 1 was used in the iron coating process. The iron-coated seed of Comparative Example 1 has a structure in which the surface of the seed is covered with a mixture layer made of iron powder and plaster of Paris and further the surface of the mixture layer is covered with a finish layer made of plaster of Paris.

### [Table 1]

**(Table 1)**

| | Soluble silicic acid | Soluble lime | Soluble magnesia | Citric acid-soluble phosphoric acid | Iron | Citric acid-soluble manganese | Citric acid-soluble boron |
|---|---|---|---|---|---|---|---|
| Contained amount [mass%] | 10.0 | 40.3 | 4.96 | 1.65 | 25.5 | 2.57 | 0.02 |

### [Table 2]

**(Table 2)**

| | Steelmaking slag powder |
|---|---|
| pH | 12.2 |
| Specific gravity | 2.2 |

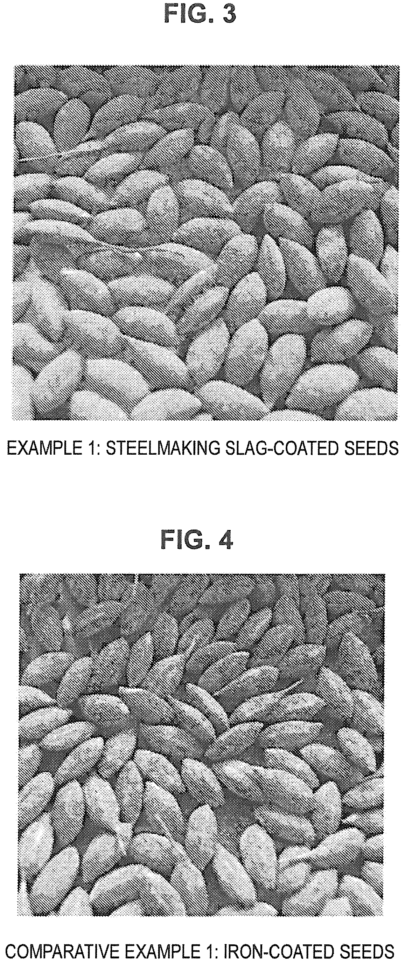

FIG. 3 shows a photograph of steelmaking slag-coated seeds of Example 1, and FIG. 4 shows a photograph of iron-coated seeds of Comparative Example 1. As shown in FIG. 3, it can be seen that, in Example 1, the seed is in a state of being uniformly coated with a steelmaking slag layer. On the other hand, in Comparative Example 1, the iron of the coating layer has turned into red rust due to oxidation, and it cannot be said that the coating layer is sufficiently uniform.

The weight of the coated seed of each of Example 1 and Comparative Example 1 was measured; in Example 1, the weight was 1.9 g per 10 seeds, whereas in Comparative Example 1, the weight was 1.8 g per 10 seeds. That is, it is presumed that the adhered weight is a little higher in the case of Example 1 than in the case of Comparative Example 1. In the steelmaking slag powder, components with smaller specific gravities than iron are contained in large amounts in addition to iron, unlike in the iron powder; thus, the specific gravity of the steelmaking slag-coated seed is smaller than the specific gravity of the iron-coated seed. In view of the difference in adhered weight and specific gravity, it can be said that the steelmaking slag-coated seed has a capability to sink into the water equal to or more than that of the iron-coated seed.

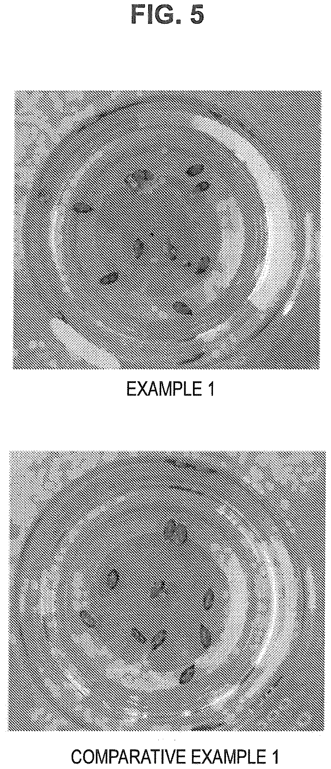

Next, a water soaking experiment of the coated seed of each of Example 1 and Comparative Example 1 was performed. 10 steelmaking slag-coated seeds of Example 1 were put into one of two beakers and 10 iron-coated seeds of Comparative Example 1 were put into the other beaker, water was poured into each beaker, and the change in the state of each coated seed was observed. FIG. 5 shows the results of the water soaking experiments of Example 1 (the upper figure) and Comparative Example 1 (the lower figure). As shown in FIG. 5, in the steelmaking slag-coated seeds of Example 1, the peeling-off of the steelmaking slag layer was seen in some seeds. On the other hand, in the iron-coated seeds of Comparative Example 1, the dusted iron powder fell off partially.

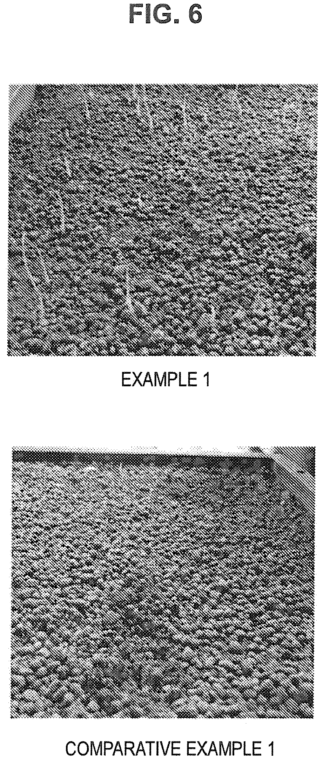

Next, for the coated seed of each of Example 1 and Comparative Example 1, the germination rate in the case where soil covering was performed on the seed was investigated. 100 steelmaking slag-coated seeds of Example 1 were sown into the soil interior of one of two indoor soil areas and were subjected to soil covering; and 100 iron-coated seeds of Comparative Example 1 were sown into the soil interior of the other soil area and were subjected to soil covering. Table 3 shows the germination rates on the 26th day after sowing and on the 34th day after sowing according to Example 1 and Comparative Example 1. FIG. 6 shows the results of the 26th day after sowing in the experiments of Example 1 (the upper figure) and Comparative Example 1 (the lower figure).

### [Table 3]

**(Table 3)**

| | Germination rate (26th day after sowing) [%] | Germination rate (34th day after sowing) [%] |
|---|---|---|
| Example 1 | 33 | 37 |
| Comparative Example 1 | 2 | 2 |

As shown in Table 3 and FIG. 6, in the case of Example 1, the germination of 33 seeds, that is, seeds of 33% of all the seeds was observed. On the other hand, in the case of Comparative Example 1, the germination of 2 seeds, that is, seeds of 2% of all the seeds was observed. On the 34th day after sowing, in the case of Example 1 the germination of 37 seeds, that is, seeds of 37% of all the seeds was observed, whereas in the case of Comparative Example 1 the germination of 2 seeds, that is, seeds of 2% of all the seeds was observed. From this, the germination rate of the steelmaking slag-coated seed shows a value approximately 20 times higher than the value in the case of the iron-coated seed, and it can be said that the steelmaking slag-coated seed is advantageous in germination in the case where soil covering is performed on the seed.

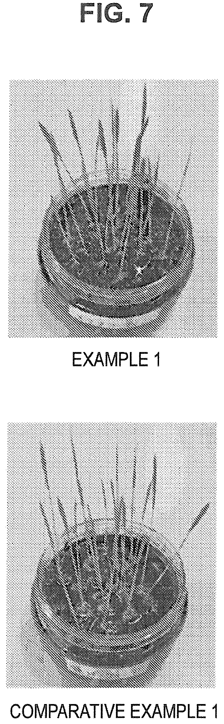

Next, for the coated seed of each of Example 1 and Comparative Example 1, the germination rate in the case where soil covering was not performed on the seed was investigated. Some of the soil was put into one of two identical plastic bottles, and 20 steelmaking slag-coated seeds of Example 1 were sown on the surface of the soil in the bottle; the same amount of the soil was put into the other plastic bottle, and 20 iron-coated seeds of Comparative Example 1 were sown on the surface of the soil in the bottle. Soil covering was not performed on either of the seeds of Example 1 and Comparative Example 1. FIG. 7 shows the results of the 26th day after sowing in the experiments of Example 1 (the upper figure) and Comparative Example 1 (the lower figure).

As shown in FIG. 7, in the case of Example 1, the germination of 19 seeds, that is, seeds of 95% of all the seeds was observed. On the other hand, in the case of Comparative Example 1, the germination of 18 seeds, that is, seeds of 90% of all the seeds was observed. From this, it can be said that, in the case where soil covering is not performed on the seed, the germination rate of the steelmaking slag-coated seed is equal to or more than the germination rate of the iron-coated seed. This is presumed to be due to the fact that mineral components dissolved out from the steelmaking slag are composed of, in addition to iron, various kinds of components such as silicic acid, calcium, manganese, magnesium, and boron, and consequently special mineral supply effects are exhibited for the seed.

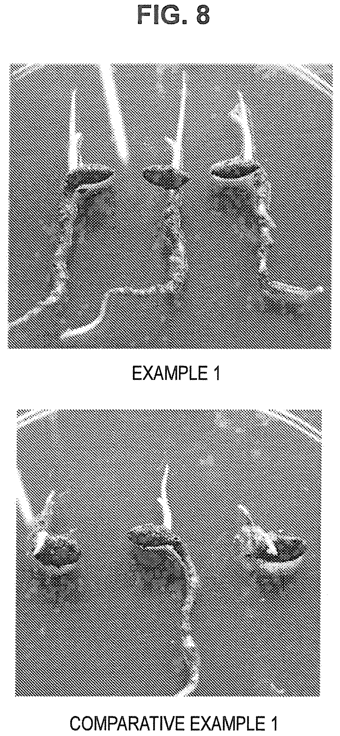

Next, the state of roots of the rice plant obtained by germination in a state where soil covering was performed on the coated seed of each of Example 1 and Comparative Example 1 was investigated. FIG. 8 shows photographs of rice plants obtained in the experiments of Example 1 (the upper figure) and Comparative Example 1 (the lower figure). As shown in FIG. 8, in the case of Example 1, the germination was rapid, and also the elongation of roots was rapid. On the other hand, in the case of Comparative Example 1, the germinate was slow, and also the elongation of roots was slow.

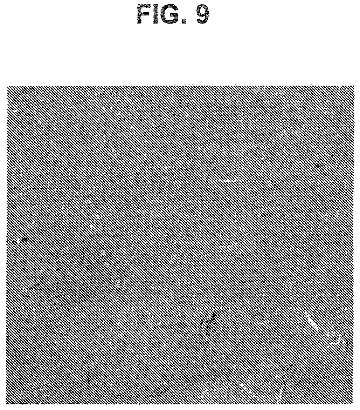

Next, steelmaking slag-coated seeds of Example 1 were scattered on a paddy field from the air, and the state of the surface of the paddy field after sowing was investigated. The scattering was performed from a point at an altitude of 5 m using a helicopter for scattering. FIG. 9 shows the state of the surface of the paddy field after sowing. As shown in FIG. 9, it has been revealed that the scattered steelmaking slag-coated seeds were sown at a point in the soil approximately 4 cm deep from the soil surface. It has also been revealed that, even after germination, the steelmaking slag layer did not peel off from the seed but remained adhered to the seed.

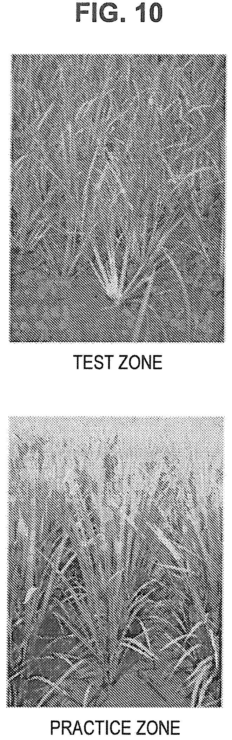

FIG. 10 shows growth conditions when the cultivation of rice plants was performed. The upper figure of FIG. 10 is a photograph showing a test zone in which the cultivation of rice plants using steelmaking slag-coated seeds of the present invention was performed, and the lower figure of FIG. 10 is a photograph showing a practice zone in which the cultivation of rice plants was performed by an ordinary method (transplanting). As shown in FIG. 10, it can be said that the method of sowing steelmaking slag-coated seeds by scattering from the air is useful as a means for preventing the occurrence of damage by birds and floating rice.

Next, the optimum conditions of seed coating were investigated from the difference in coating performance due to the difference in particle size distribution. 3 kinds of steelmaking slag with different particle size distributions were prepared, and the seed coating performance was evaluated by the adhered weight (g/100 seeds). The steelmaking slag used was classified into 3 kinds of the coarse grade, the medium grade, and the fine grade in accordance with the pulverization method. As shown in Table 4, the coarse grade includes under-1-mm-sieve products, the medium grade includes ball-mill-pulverized products, and the fine grade includes mortar-pulverized products of under-sieve products of the medium grade. For the particle size distribution, particles with particle sizes in the range of more than 0.045 mm were measured with a low tap sieve shaker, and particles with particle sizes in the range of 0.045 mm or less were measured by the laser diffraction scattering method. The adhered weight was estimated by wetting 100 rice seeds (unhulled rice) with water, putting the rice seeds into a beaker, coating the rice seeds with steelmaking slag while rotating the beaker, performing drying, and weighing the steelmaking slag-coated seeds collected after the drying.

### [Table 4]

**(Table 4)**

| | Details |
|---|---|
| Coarse grade | Under-1-mm-sieve products of powdery fertilizer |
| Medium grade | Pulverized with ball mill |
| Fine grade | Pulverized products of medium grade were further pulverized with mortar |

The particle size distribution was measured; the results of the frequency in particle size ranges are shown in Table 5 and Table 6. In order to adhere the steelmaking slag powder to the seed without using an additional solidifying agent, it is preferable that the frequency in the particle size range of 45 µm or less be 20% or more. From this point of view and Table 5, the medium grade and the fine grade are suitable as a coating agent. Further, as shown in Table 6, it has been found that the particle size distribution is shifted to the small particle size side with transition from the coarse grade to the medium grade to the fine grade.

### [Table 5]

**(Table 5)**

| Sample name | Frequency [%] | | | | | | | | |
|---|---|---|---|---|---|---|---|---|---|
| | +2mm | ∼1mm | ∼0.5mm | ∼0.25mm | ∼0.15mm | ∼0.10mm | ∼0.075mm | ∼0.045mm | -0.045mm |
| Coarse grade | 0.0 | 0.0 | 21.3 | 23.7 | 20.9 | 13.2 | 6.9 | 7.0 | 7.0 |
| Medium grade | 0.0 | 1.2 | 1.5 | 5.1 | 14.4 | 13.3 | 12.5 | 7.7 | 44.3 |
| Fine grade | 0.0 | 0.8 | 0.9 | 7.2 | 16.0 | 17.9 | 12.4 | 5.9 | 38.9 |

### [Table 6]

**(Table 6)**

| Sample name | Cumulative frequency 10% lower limit value [*µ*m] | Cumulative frequency 50% median value [*µ*m] | Cumulative frequency 90% upper limit value [*µ*m] | Measurement method |
|---|---|---|---|---|
| Coarse grade | 14.12 | 33.42 | 54.97 | JIS R 1629 Laser diffraction scattering method Apparatus: MT3000 manufactured by Nikkiso Co., Ltd. |
| Medium grade | 5.140 | 24.17 | 53.13 | |
| Fine grade | 4.637 | 22.96 | 51.67 | |

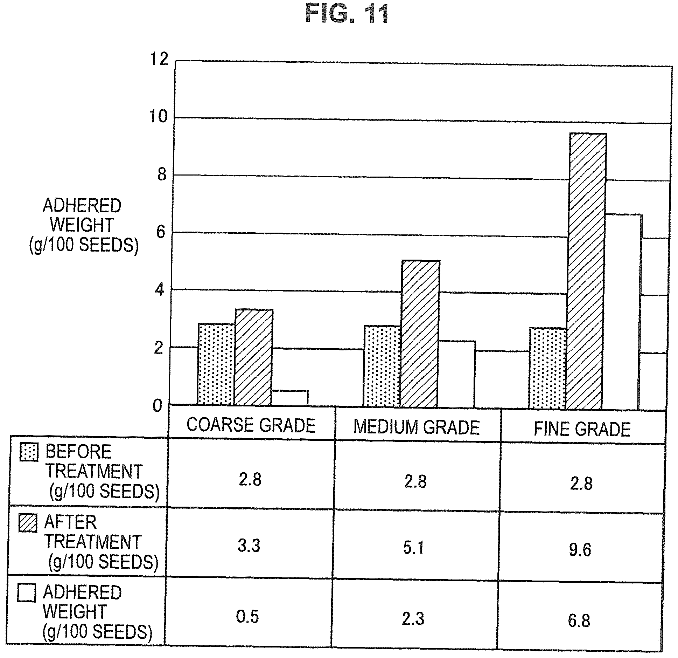

The adhered weight was measured; as shown in Table 7 and FIG. 11, the result was that the adhered weight was 0.5 g/100 seeds in the coarse grade, 2.3 g/100 seeds in the medium grade, and 6.8 g/100 seeds in the fine grade, and the adhered weight increased as the steelmaking slag powder was pulverized more finely. In the section of evaluation of Table 7, the triangle sign stands for a little poor, the circle sign for good, and the double circle sign for the best.

### [Table 7]

**(Table 7)**

| | Before treatment (g/100 seeds) | After treatment (g/100 seeds) | Adhered weight (g/100 seeds) | Evaluation |
|---|---|---|---|---|
| Coarse grade | 2.8 | 3.3 | 0.5 | Δ |
| Medium grade | 2.8 | 5.1 | 2.3 | ○ |
| Fine grade | 2.8 | 9.6 | 6.8 | ⊚ |

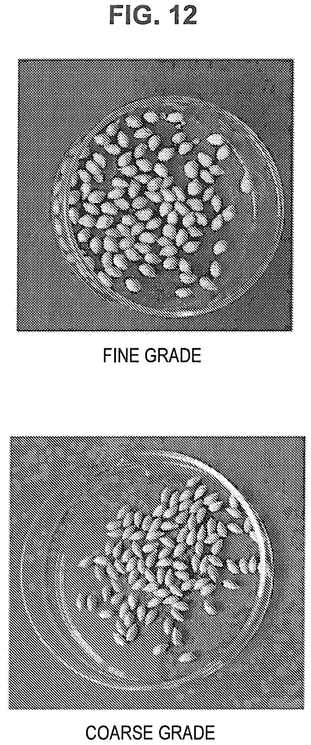

FIG. 12 shows photographs of steelmaking slag-coated seeds produced with steelmaking slag powder of the coarse grade and the fine grade. As shown in FIG. 12, the steelmaking slag-coated seeds produced with steelmaking slag powder of the fine grade have formed a plumper external appearance than in the case of the coarse grade, and it can be said that the adhered weight increases as the steelmaking slag powder is pulverized more finely.

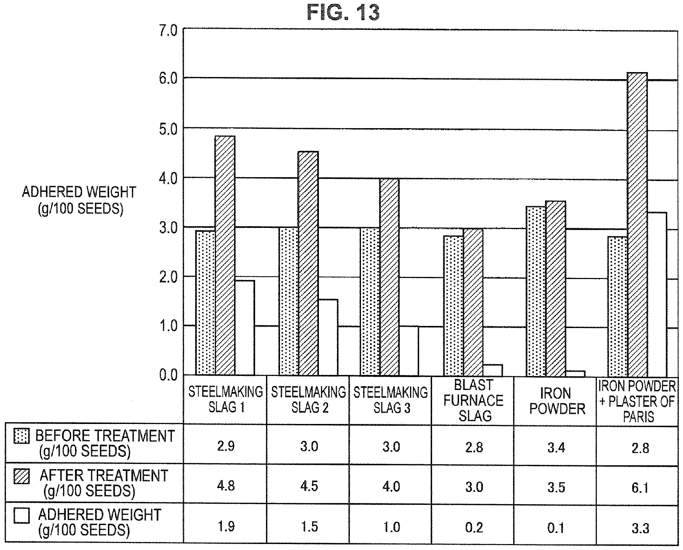

Next, the difference in seed coating performance due to the difference in the contained amounts of iron and calcium of the steelmaking slag was evaluated by the adhered weight (g/100 seeds). As the test material for coating the surface of the seed, varieties of steelmaking slag 1 to 3 of different components, blast furnace slag, iron powder, and iron powder + plaster of Paris of the contained amounts of iron and calcium shown in Table 8 were used. The varieties of steelmaking slag 1 and 2 contain the amount of iron and the amount of calcium prescribed in the present embodiment. In each of the varieties of slag mentioned above, silicic acid, lime, magnesia, phosphoric acid, manganese, boron, aluminum, carbon, oxygen, etc. are contained in addition to iron and calcium. Among the test materials mentioned above, the test materials excluding iron powder + plaster of Paris were finely pulverized with a mortar, and the particle sizes of the test materials were equalized. The coating method for the materials other than iron powder + plaster of Paris is the same as Example 1 described above. The results of measurement of the adhered weight of the materials are shown in Table 9 and FIG. 13. In the section of evaluation of Table 9, the "X" sign stands for poor, the triangle sign for a little poor, and the circle sign for good.

### [Table 8]

**(Table 8)**

| Name of test material | Contained amount of iron [mass%] | Contained amount of calcium [mass%] |
|---|---|---|
| Steelmaking slag 1 | 25 | 42 |
| Steelmaking slag 2 | 12 | 43 |
| Steelmaking slag 3 | 8 | 39 |
| Blast furnace slag | 0 | 42 |
| Iron powder | 100 | 0 |
| Iron powder + plaster of Paris | 90 | 3 |

### [Table 9]

**(Table 9)**

| Name of test material | Before treatment (g/100 seeds) | After treatment (g/100 seeds) | Specific gravity (each test material) | Adhered weight (g/100 seeds) | Adhered volume (cm³/100 seeds) | Evaluation |
|---|---|---|---|---|---|---|
| Steelmaking slag 1 | 2.9 | 4.8 | 1.8 | 1.9 | 1.06 | ○ |
| Steelmaking slag 2 | 3.0 | 4.5 | 1.5 | 1.5 | 1.00 | ○ |
| Steelmaking slag 3 | 3.0 | 4.0 | 1.4 | 1.0 | 0.71 | Δ |
| Blast furnace slag | 2.8 | 3.0 | 1.3 | 0.2 | 0.15 | × |
| Iron powder | 3.4 | 3.5 | 4.3 | 0.1 | 0.02 | × |
| Iron powder + plaster of Paris | 2.8 | 6.1 | 4.0 | 3.3 | 0.83 | ○ |

Iron powder + plaster of Paris was used for seed coating as it was without fine pulverization. For iron powder + plaster of Paris, 10 parts by weight of iron powder and 1 part by weight of plaster of Paris relative to 100 parts by weight of seeds wetted with water were added and mixed, and the surface of the seed was coated using the mixture mentioned above; further, 24 hours later, plaster of Paris was added at a ratio of 0.5 parts by weight while being wetted again with a sprayer, and thereby the surface of the iron powder + plaster of Paris layer was coated; thus, coated seeds were obtained.

As shown in Table 9 and FIG. 13, the adhered weight per 100 seeds was larger in the conventional method (iron powder + plaster of Paris) than in steelmaking slag 1 and steelmaking slag 2; but in terms of the adhered volume per 100 g, steelmaking slag 1 and steelmaking slag 2 were superior to the conventional method (iron powder + plaster of Paris). Steelmaking slag 3, blast furnace slag, and iron powder were inferior to iron powder + plaster of Paris in both adhered weight and adhered volume.

From these, it can be said that, as compared to the case of iron powder + plaster of Paris, steelmaking slag 1 and steelmaking slag 2, although the adhered weight is small, have good efficiency of adhesion to the surface of the seed when the specific gravity is taken into account, and were able to be uniformly adhered over a wide range of the surface of the seed even when only a small amount was used. On the other hand, it can be said that, for iron powder + plaster of Paris, although the adhered weight is largest, the adhered volume is small and the efficiency of adhesion to the surface of the seed is not good when the specific gravity is taken into account.

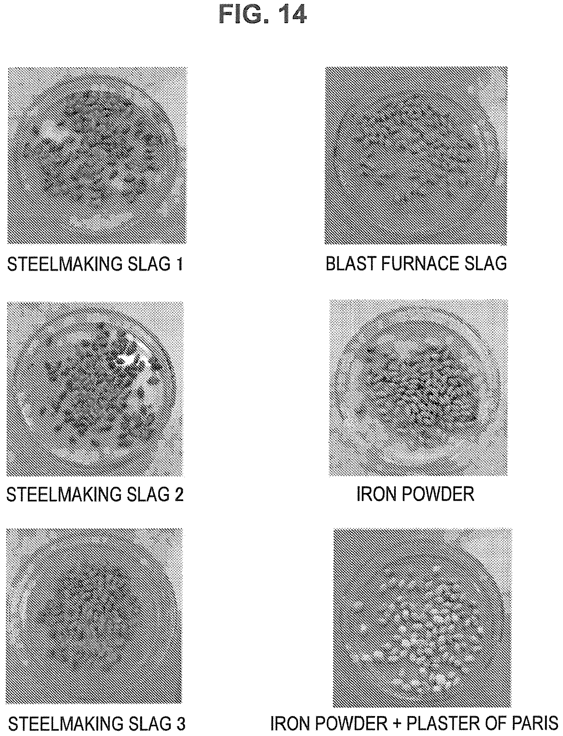

As shown in FIG. 14, the uniformity of the adhesion of the steelmaking slag powder to the seed varied with the kind of slag, that is, the contained amounts of iron and calcium. Steelmaking slag 1, steelmaking slag 2, and iron + plaster of Paris adhered to the seed almost uniformly. However, steelmaking slag 3 adhered to only part of the seed. Further, blast furnace slag alone and iron powder alone hardly adhered to the seed.

### <Examples corresponding to second embodiment>

Next, Examples corresponding to the second embodiment of the present invention are described, along with Comparative Examples. However, the technical scope of the present embodiment is not limited to Examples described below. In the following, "the steelmaking slag-coated seed" is also referred to as a "covered rice seed."

### [Test Example 1]

Using 9 kinds of slag of the composition shown in Table 10, sieved-out particles adjusted to a maximum particle size of less than 600 µm were prepared. Samples A, C, D, E, and F are steelmaking slag obtained from a converter of a steel process. Sample B is steelmaking slag obtained from a molten iron preliminary treatment process. Sample G is dephosphorization slag, and sample H is decarburization slag. Sample I is a preparation in which 50 mass% sample G and 50 mass% sample H are mixed together.

All of the compositions of 5 kinds of steelmaking slag of sample A to sample E among these samples were a composition in which the contained amount of CaO was 25 mass% or more and 50 mass% or less and the contained amount of SiO₂ was 8 mass% or more and 30 mass% or less. The compositions of the 5 kinds of steelmaking slag of sample A to sample E further satisfied a composition in which the contained amount of MgO was 1 mass% or more and 20 mass% or less, the contained amount of Al₂O₃ was 1 mass% or more and 25 mass% or less, the contained amount of Fe was 5 mass% or more and 35 mass% or less, the contained amount of Mn was 1 mass% or more and 8 mass% or less, and the contained amount of P₂O₅ was 0.1 mass% or more and 5 mass% or less.

On the other hand, sample F contains 55% CaO and is neither dephosphorization slag nor decarburization slag, and is therefore a sample of steelmaking slag outside the range of the present embodiment.

Sample G contains 35.0% SiO₂ and does not fall under the composition of steelmaking slag mentioned above, but is dephosphorization slag and is a sample within the range of the present embodiment. Sample H is decarburization slag and is a sample within the range of the present embodiment. Sample I is a mixture of dephosphorization slag and decarburization slag and is a sample within the range of the present embodiment.

### [Table 10]

**(Table 10) Composition of 9 kinds of slag (mass%)**

| | CaO | SiO₂ | MgO | Al₂O₃ | Fe | Mn | P₂O₅ |
|---|---|---|---|---|---|---|---|
| Sample A | 30.7 | 17.5 | 16.5 | 16.5 | 6.2 | 1.2 | 0.17 |
| Sample B | 36.8 | 17.5 | 1.7 | 1.6 | 30.6 | 1.6 | 2.00 |
| Sample C | 43.7 | 12.5 | 5.6 | 4.4 | 17.7 | 3.5 | 1.88 |
| Sample D | 27.1 | 17.7 | 15.0 | 21.0 | 9.0 | 1.2 | 0.14 |
| Sample E | 40.9 | 13.0 | 8.4 | 2.1 | 19.1 | 3.0 | 2.82 |
| Sample F | 55.0 | 15.6 | 6.3 | 3.8 | 10.3 | 2.3 | 1.45 |
| Sample G | 38.2 | 35.0 | 3.3 | 4.7 | 9.4 | 2.0 | 1.23 |
| Sample H | 39.5 | 8.5 | 2.8 | 5.6 | 15.1 | 2.1 | 1.47 |
| Sample I | 38.9 | 21.8 | 3.1 | 5.2 | 12.3 | 2.1 | 1.35 |

Water was added to each of the 9 kinds of samples with a sieved particle size adjusted to less than 600 µm so that the mass ratio of water in the mixture of each sample and water might be 30%, and mixing was performed. A rice seed (variety: "Fusakogane") was put into the mixture of each sample and water and mixing was performed, and the rice seed was covered with the sample mentioned above. The mass of each sample used for covering was equivalent to 0.6 on the assumption that the mass of the rice seed is 1. The covered rice seed was air-dried for 3 hours in a well-ventilated state. Thus, a rice seed covered with each of the rice seed coating materials mentioned above was produced. The surface of the produced rice seed was entirely covered with the sample mentioned above.

A sodium chloride aqueous solution (specific gravity: 1.4) was prepared, and it was investigated whether the rice seed covered with each of the 9 kinds of slag mentioned above and a not-covered rice seed settled or not. As shown in the results of Table 11, the not-covered rice seed did not settle, whereas the rice seed covered with each of the varieties of slag of sample A to sample I settled. Thus, it has been found that the settleability of the rice seed is increased by covering the rice seed with various kinds of slag like those mentioned above.

### [Table 11]

**(Table 11) Results of settleability of rice seed (○: settled; ×: not settled)**

| | Not-covered seed | Sample A-covered seed | Sample B-covered seed | Sample C-covered seed | Sample D-covered seed | Sample E-covered seed | Sample F-covered seed | Sample G-covered seed | Sample H-covered | Sample I-covered seed |
|---|---|---|---|---|---|---|---|---|---|---|
| Settleability | × | ○ | ○ | ○ | ○ | ○ | ○ | ○ | ○ | ○ |

### [Test Example 2]

A piece of circular filter paper (diameter: 11 cm) was laid over a plastic laboratory dish with a diameter of 11 cm. Distilled water was added, and the piece of filter paper was shallowly immersed in the distilled water. 25 rice seeds that were covered with each of the 9 kinds of slag of the composition shown in Table 10 by a similar method to Test Example 1 were put on the piece of filter paper shallowly immersed in the distilled water that was put in a laboratory dish different from sample to sample. As a control, a laboratory dish was prepared also for not-covered rice seeds that were not covered with steelmaking slag, and similarly 25 seeds were put on a piece of filter paper shallowly immersed in distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. For the germinated seed, the length of the radicle and the seedling was measured.

Table 12 below shows the results of the number of germinated seeds and the germination rate.

### [Table 12]

**(Table 12) Number of germinated seeds and germination rate**

| | Not-covered seed | Sample A-covered seed | Sample B-covered seed | Sample C-covered seed | Sample D-covered seed | Sample E-covered seed | Sample F-covered seed | Sample G-covered seed | Sample H-covered seed | Sample I-covered seed |
|---|---|---|---|---|---|---|---|---|---|---|
| Number of germinated seeds (seeds) | 21 | 19 | 22 | 20 | 22 | 21 | 15 | 21 | 21 | 21 |
| Germination rate (%) | 84 | 76 | 88 | 80 | 88 | 84 | 60 | 84 | 84 | 84 |

Although steelmaking slag is a material exhibiting alkalinity around a pH of 11, the rice seeds covered with each of sample A to sample E within the range of the present embodiment have a germination rate around 80%, similarly to the not-covered rice seeds; and it has been found that the rice seeds covered with the steelmaking slag coating material within the range of the present embodiment have a germination rate at approximately the same level as the not-covered rice seeds of a control. On the other hand, in sample F, since it is steelmaking slag having strong alkalinity in which the contained amount of CaO is as high as 55%, the germination rate was 60%, which was lower than the germination rate of the not-covered rice seeds. In sample G, which is dephosphorization slag, sample H, which is decarburization slag, and sample I, which was prepared by mixing both dephosphorization slag and decarburization slag, the germination rate was 84%, which was equal to the germination rate of the not-covered rice seeds.

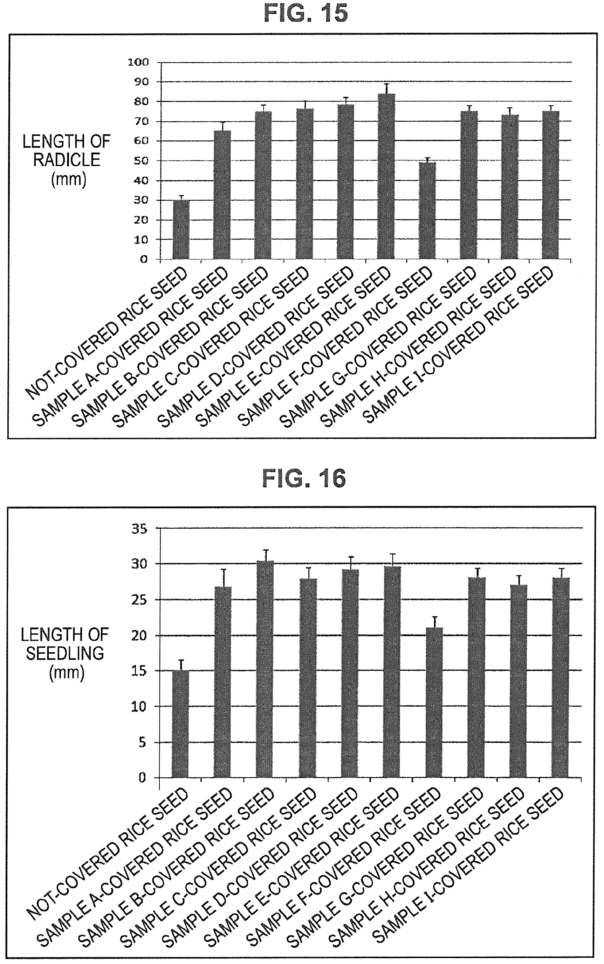

FIG. 15 shows the average value of the measurement results of the lengths of the germinated radicles of the seeds covered with each sample and the not-covered seeds serving as a control, by comparison on a graph. FIG. 15 shows also the standard deviation.

FIG. 16 shows the average value of the measurement results of the lengths of the germinated seedlings of the seeds covered with each sample and the not-covered seeds serving as a control, by comparison on a graph. FIG. 16 shows also the standard deviation.

As shown in the results of FIG. 15 and FIG. 16, in the seeds covered with 5 kinds of slag of sample A to sample E within the range of the present embodiment, both the growth of the radicle and the growth of the seedling after germination were more promoted than in the not-covered seeds of a control. In the rice seeds covered with sample G, which is dephosphorization slag, sample H, which is decarburization slag, and sample I prepared by mixing both dephosphorization slag and decarburization slag, both the growth of the radicle and the growth of the seedling after germination were more promoted than in the not-covered rice seeds of a control. On the other hand, in the rice seeds covered with sample F in which the contained amount of CaO is as high as 55%, both the growth of the radicle and the growth of the seedling were suppressed as compared to the rice seeds covered with sample A to sample E, sample G, sample H, and sample I. However, both the growth of the radicle and the growth of the seedling were more promoted than in the not-covered rice seeds.

Thus, it has been found that the germination rate of the rice seeds covered with steelmaking slag of a composition in which the contained amount of CaO is 25 mass% or more and 50 mass% or less, the contained amount of SiO₂ is 10 mass% or more and 30 mass% or less, the contained amount of MgO is 1 mass% or more and 20 mass% or less, the contained amount of Al₂O₃ is 1 mass% or more and 25 mass% or less, the contained amount of Fe is 5 mass% or more and 35 mass% or less, the contained amount of Mn is 1 mass% or more and 8 mass% or less, and the contained amount of P₂O₅ is 0.1 mass% or more and 5 mass% or less is substantially equal to the germination rate of the not-covered seeds of a control, and the growth of roots and the seedling after germination can be promoted as compared to the not-covered rice seeds. It has also been found that the germination rate of the rice seeds covered with dephosphorization slag, decarburization slag, and a mixture of both dephosphorization slag and decarburization slag is substantially equal to the germination rate of the not-covered rice seeds of a control, and the growth of roots and the seedling after germination can be promoted.

### [Test Example 3]

A piece of circular filter paper (diameter: 11 cm) was laid over a plastic laboratory dish with a diameter of 11 cm. Distilled water was added, and the piece of filter paper was shallowly immersed in the distilled water. 25 rice seeds covered with sample B with a maximum particle size of 600 µm having the composition shown in Table 10 and 25 rice seeds covered with powder of pure iron with a maximum particle size of 600 µm likewise were put individually on the pieces of filter paper shallowly immersed in the distilled water in different laboratory dishes. As a control, a laboratory dish was prepared also for not-covered rice seeds that were not covered with steelmaking slag, and similarly 25 seeds were put on a piece of filter paper shallowly immersed in distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. For the germinated seed, the length of the radicle and the seedling was measured.

Table 13 below shows the results of the number of germinated seeds and the germination rate.

### [Table 13]

**(Table 13) Number of germinated seeds and germination rate**

| | Not-covered seed | Sample B-covered seed | Iron powder-covered seed |
|---|---|---|---|
| Number of germinated seeds (seeds) | 21 | 22 | 20 |
| Germination rate (%) | 84 | 88 | 80 |

The rice seeds covered with sample B within the range of the present embodiment had a higher germination rate than the not-covered seeds and the iron powder-covered seeds.

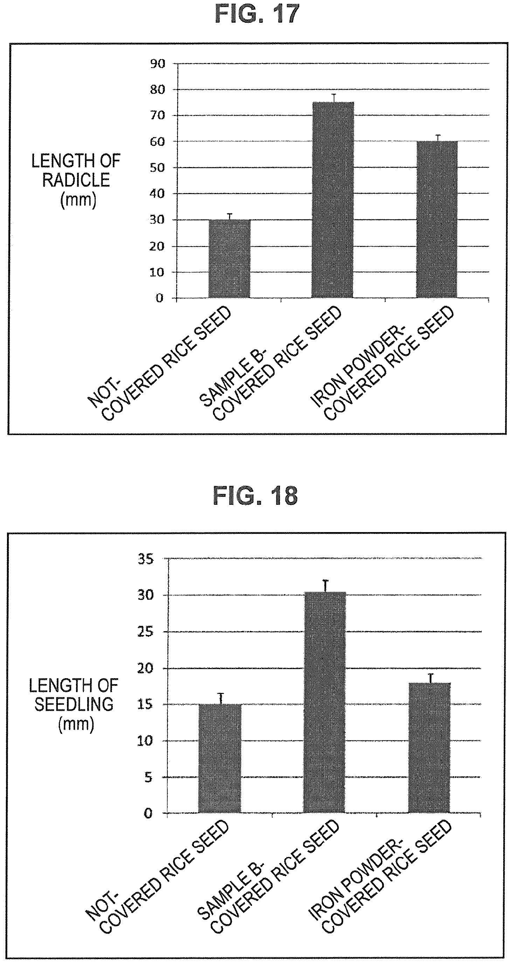

FIG. 17 shows the average value of the measurement results of the lengths of the germinated radicles, by comparison on a graph. FIG. 17 shows also the standard deviation.

FIG. 18 shows the average value of the measurement results of the lengths of the germinated seedlings, by comparison on a graph. FIG. 18 shows also the standard deviation.

As shown in the results of FIG. 17 and FIG. 18, in the seeds covered with sample B within the range of the present embodiment, both the growth of the radicle and the growth of the seedling after germination were more promoted than in the not-covered seeds and the iron powder-covered seeds.

Thus, it has been found that, by covering the rice seed with steelmaking slag of a composition in which the contained amount of CaO is 25 mass% or more and 50 mass% or less, the contained amount of SiO₂ is 10 mass% or more and 30 mass% or less, the contained amount of MgO is 1 mass% or more and 20 mass% or less, the contained amount of Al₂O₃ is 1 mass% or more and 25 mass% or less, the contained amount of Fe is 5 mass% or more and 35 mass% or less, the contained amount of Mn is 1 mass% or more and 8 mass% or less, and the contained amount of P₂O₅ is 0.1 mass% or more and 5 mass% or less, a steelmaking slag-coated seed with good growth is obtained less expensively than by covering the rice seed with iron powder.

### [Test Example 4] (comparison to iron powder)

A piece of circular filter paper (diameter: 11 cm) was laid over a plastic laboratory dish with a diameter of 11 cm. Distilled water was added, and the piece of filter paper was shallowly immersed in the distilled water. 25 rice seeds that were covered with steelmaking slag sample C with a maximum particle size of 600 µm having the composition shown in Table 10 by the method described in Test Example 1 and 25 rice seeds covered with powder of pure iron with a maximum particle size of 600 µm likewise were put individually on the pieces of filter paper shallowly immersed in the distilled water in different laboratory dishes. As a control, a laboratory dish was prepared also for not-covered rice seeds that were not covered with steelmaking slag, and similarly 20 seeds were put on a piece of filter paper shallowly immersed in distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. For the germinated seed, the length of the radicle was measured.

Table 14 below shows the results of the number of germinated seeds and the germination rate.

### [Table 14]

**(Table 14) Number of germinated seeds and germination rate**

| | Not-covered seed | Sample C-covered seed | Iron powder-covered seed |
|---|---|---|---|
| Number of germinated seeds (seeds) | 18 | 18 | 17 |
| Germination rate (%) | 90 | 90 | 85 |

The rice seeds covered with steelmaking slag sample C within the range of the present embodiment had a germination rate substantially equal to the germination rate of the not-covered seeds, and had a germination rate higher than the germination rate of the iron powder-covered seeds.

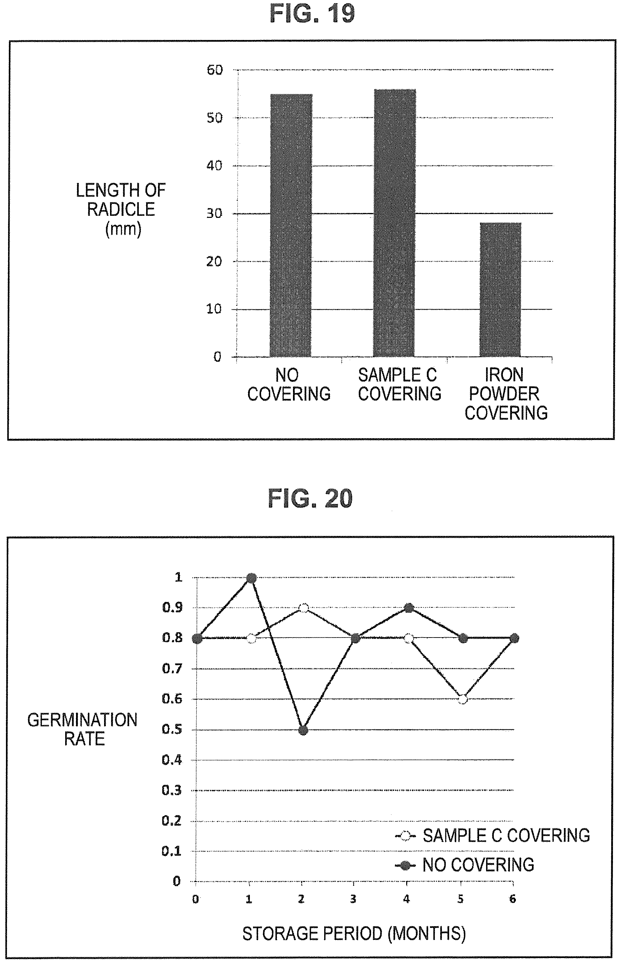

FIG. 19 shows the average value of the measurement results of the lengths of the germinated radicles, by comparison on a graph.

The seeds covered with steelmaking slag sample C within the range of the present embodiment exhibited a growth of the radicle substantially equal to that of the not-covered seeds. On the other hand, in the iron powder-covered seeds, the growth of the radicle after germination was significantly poor.

The pH of the water left in the laboratory dish was investigated; the water of the laboratory dish of the not-covered seeds had a pH of 5.8, and the water of the laboratory dish of the rice seeds covered with sample C had a pH of 8.0; on the other hand, the water of the laboratory dish of the iron powder-covered seeds had a pH of 4.0 and was acidified. It is presumed that iron was dissolved to form iron hydroxide and was thereby acidified, and the acidified condition inhibited the growth of the radicle after germination of the iron powder-covered seed.

Thus, it has been found that, by covering the rice seed with steelmaking slag of a composition in which the contained amount of CaO is 25 mass% or more and 50 mass% or less, the contained amount of SiO₂ is 10 mass% or more and 30 mass% or less, the contained amount of MgO is 1 mass% or more and 20 mass% or less, the contained amount of Al₂O₃ is 1 mass% or more and 25 mass% or less, the contained amount of Fe is 5 mass% or more and 35 mass% or less, the contained amount of Mn is 1 mass% or more and 8 mass% or less, and the contained amount of P₂O₅ is 0.1 mass% or more and 5 mass% or less, a steelmaking slag-coated seed with good growth is obtained less expensively than by covering the rice seed with iron powder. It has also been revealed that, in the iron powder-covered seed, acidification in association with iron hydroxide formation inhibits the growth of the radicle, depending on conditions.

### [Test Example 5] (long-term storage)

Rice seeds that were covered with steelmaking slag sample C with a maximum particle size of 600 µm having the composition shown in Table 10 by the method described in Test Example 1 and not-covered rice seeds of a control were stored in a dark place at room temperature. The germination rates of steelmaking slag-coated seeds covered with sample C after drying at room temperature for 3 hours (0 days) and steelmaking slag-coated seeds stored for 1 month, 2 months, 3 months, 4 months, 5 months, and 6 months were investigated. For comparison, also the germination rates of not-covered rice seeds stored in the same environments were investigated. The investigation of the germination rate is based on the following method.

A germination test was performed at the time point when each of the storage periods of 0 days, 1 month, 2 months, 3 months, 4 months, 5 months, and 6 months has elapsed.

A piece of circular filter paper (diameter: 11 cm) was laid over a plastic laboratory dish with a diameter of 11 cm. Distilled water was added, and the piece of filter paper was shallowly immersed in the distilled water. 20 steelmaking slag-coated seeds were put on the piece of filter paper shallowly immersed in the distilled water. As a control, a laboratory dish was prepared also for not-covered rice seeds that were not covered with steelmaking slag, and similarly 20 seeds were put on a piece of filter paper shallowly immersed in distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated.

FIG. 20 shows the results of the stored period and the germination rate.

Although steelmaking slag sample C is alkaline, the results of the germination test have revealed that the rice seed covered with sample C can germinate well even after it is stored for 6 months. Thus, the steelmaking slag-coated seed according to the present embodiment can be stored for a long period.

### [Test Example 6] (starch treatment)

40 Koshihikari seeds were soaked for 10 minutes in a liquid in which starch was suspended in water to set the concentration to 50 mass%. The seeds were extracted from the starch suspension; the seeds were stirred in a suspension of sample C in which steelmaking slag sample C described in Test Example 1 was suspended at 66 mass% in water, and thus the seeds were covered with sample C; and the covered seeds were extracted, and were dried at room temperature for 24 hours. As a control, also 40 rice seeds that were not soaked in a suspension of starch were stirred in a suspension of sample C in which steelmaking slag sample C described in Test Example 1 was suspended at 66 mass% in water, and thus seeds on which starch treatment was not performed were prepared.

The average value of the mass per seed of the starch-treated seeds covered with sample C and the not-starch-treated seeds covered with sample C, and the average value of the mass per seed of not-covered seeds are shown in Table 15 below. Further, the mass of the not-covered seed was subtracted from the mass of the rice seed covered with sample C to calculate the mass of the covering substance, and the results are shown in Table 15 as well. Also the ratio of the mass of the covering substance to the mass of the not-covered seed is shown.

### [Table 15]

**(Table 15) Mass of rice seed and mass of covering substance per rice seed**

| | Starch-treated rice seed covered with sample C | Not-starch-treated rice seed covered with sample C | Not-covered rice seed |
|---|---|---|---|
| Mass of rice seed (g) | 0.0567 | 0.0422 | 0.0283 |
| Mass of covering substance (g) | 0.0284 | 0.0139 | - |
| Mass of covering substance/ Mass of not-covered seed | 1.00 | 0.49 | - |

In the not-starch-treated seed, the ratio of the mass of the covering substance to the mass of the not-covered seed was 0.49, whereas in the starch-treated seed, the ratio of the mass of the covering substance to the mass of the not-covered seed was increased to 1, and the adhered amount of the covering substance was able to be increased.

20 starch-treated rice seeds covered with sample C and 20 not-starch-treated rice seeds covered with sample C that were produced by being covered with sample C and then dried at room temperature for 24 hours were naturally dropped once onto an iron plate from a position at a height of 20 cm. The rice seeds dropped on the iron plate were collected, and the mass was measured to investigate the mass of the covering substance per seed after dropping; the results (average value) are shown in Table 16 below.

Further, the ratio of the mass of the covering substance after dropping to the mass of the covering substance before dropping was calculated, and the results are shown in Table 16 below as well.

### [Table 16]

**(Table 16) Effect on mass of covering substance by dropping onto iron plate**

| | Starch-treated rice seed covered with sample C | Not-starch-treated rice seed covered with sample C |
|---|---|---|
| Mass of covering substance after dropping (g) | 0.0262 | 0.0083 |
| Mass of covering substance after dropping/ Mass of covering substance before dropping | 0.92 | 0.60 |

The ratio of the mass of the covering substance after dropping to the mass of the covering substance before dropping was a larger value in the case where starch treatment was performed than in the case where starch treatment was not performed. Thus, it has been found that, by starch treatment, the fixability of the covering substance was increased, and the covering substance became less likely to peel off.

A germination test was performed using covered rice seeds that were covered with sample C and then dried at room temperature for 24 hours. A piece of circular filter paper (diameter: 11 cm) was laid over a plastic laboratory dish with a diameter of 11 cm. Distilled water was added, and the piece of filter paper was shallowly immersed in the distilled water. 20 starch-treated covered rice seeds and 20 not-starch-treated covered rice seeds were put individually on the pieces of filter paper shallowly immersed in the distilled water. As a control, a laboratory dish was prepared also for not-covered rice seeds that were not covered with steelmaking slag, and similarly 20 seeds were put on a piece of filter paper shallowly immersed in distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. A germination test was similarly performed using the not-covered rice seeds as a control. Table 17 below is the results of the germination rate.

### [Table 17]

**(Table 17) Results of germination rate**

| | Starch-treated rice seed covered with sample C | Not-starch-treated rice seed covered with sample C | Not-covered rice seed |
|---|---|---|---|
| Germination rate (%) | 85 | 85 | 85 |

The starch-treated covered rice seeds showed a high germination rate substantially equal to the germination rates of the not-starch-treated covered rice seeds and the not-covered rice seeds.

Thus, it has been revealed that, by covering a starch-treated rice seed with steelmaking slag, the mass of the covering substance can be increased, and yet the germination rate can be kept at a high value.

### [Test Example 7] (gypsum outer covering)

80 Koshihikari seeds were stirred in a suspension of sample C in which steelmaking slag sample C described in Test Example 1 was suspended at 66 mass% in water, and thus the seeds were covered with sample C; and the covered seeds were extracted, and were dried at room temperature for 24 hours. Of the 80 seeds covered with sample C, 40 seeds were further subjected to outer covering with gypsum. The outer covering with gypsum was performed in the following manner.

40 seeds covered with sample C were soaked in a suspension of gypsum in which hemihydrate gypsum was suspended at 30 mass% in water, were quickly extracted, and were dried at room temperature for 24 hours; thus, 40 seeds in which the outside of the covering of sample C was further outer-covered with gypsum were produced.

Table 18 below shows the average mass per seed of the rice seeds covered only with sample C, the rice seeds covered with sample C and further covered with gypsum on the outside, and not-covered rice seeds. Further, the mass of the not-covered seed was subtracted from the mass of the covered rice seed to calculate the mass of the covering substance, and the results are shown in Table 18 as well. Also the ratio of the mass of the covering substance to the mass of the not-covered seed is shown.

### [Table 18]

**(Table 18) Mass of rice seed and mass of covering substance per rice seed**

| | Rice seed covered only with sample C | Rice seed covered with sample C and further covered with gypsum on outside | Not-covered rice seed |
|---|---|---|---|
| Mass of rice seed (g) | 0.0428 | 0.0536 | 0.0278 |
| Mass of covering substance (g) | 0.0150 | 0.0258 | - |
| Mass of covering substance/ Mass of not-covered seed | 0.54 | 0.93 | - |

In the seed covered only with sample C, the ratio of the mass of the covering substance to the mass of the not-covered seed was 0.54, whereas in the seed covered with sample C and further covered with gypsum on the outside, the ratio of the mass of the covering substance to the mass of the not-covered seed was 0.93; thus, the adhered amount was able to be increased by being covered with sample C and then further covered with gypsum from the outside.

20 rice seeds covered with sample C and 20 rice seeds covered with sample C and further covered with gypsum on the outside were naturally dropped once onto an iron plate from a position at a height of 20 cm. The rice seeds dropped on the iron plate were collected, and the mass was measured to investigate the mass of the covering substance per seed after dropping; the results (average value) are shown in Table 19 below.

Further, the ratio of the mass of the covering substance after dropping to the mass of the covering substance before dropping was calculated, and the results are shown in Table 19 below as well.

### [Table 19]

**(Table 19) Effect on mass of covering substance by dropping onto iron plate**

| | Rice seed covered only with sample C | Rice seed covered with sample C and further covered with gypsum on outside |
|---|---|---|
| Mass of covering substance after dropping (g) | 0.01 | 0.0243 |
| Mass of covering substance after dropping/ Mass of covering substance before dropping | 0.67 | 0.94 |

The ratio of the mass of the covering substance after dropping to the mass of the covering substance before dropping was a larger value in the case of being covered with sample C and further covered with gypsum on the outside than in the case of being covered only with sample C. Thus, it has been found that, by being covered steelmaking slag and further covered with gypsum on the outside, the adhesiveness of the covering substance was increased, and the covering substance became less likely to peel off.

20 rice seeds covered only with sample C and 20 rice seeds covered with sample C and then further covered with gypsum on the outside were used for a germination test. A piece of circular filter paper (diameter: 11 cm) was laid over a plastic laboratory dish with a diameter of 11 cm. Distilled water was added, and the piece of filter paper was shallowly immersed in the distilled water. 20 rice seeds covered only with sample C and 20 rice seeds covered with sample C and then further covered with gypsum on the outside were put individually on the pieces of filter paper shallowly immersed in the distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. Table 20 below is the results of the germination rate.

### [Table 20]

**(Table 20) Results of germination rate**

| | Rice seed covered only with sample C | Rice seed covered with sample C and further covered with gypsum on outside |
|---|---|---|
| Germination rate (%) | 85 | 85 |

The rice seeds covered with sample C and then covered with gypsum on the outside showed a high germination rate of 80% or more, which was substantially equal to the germination rate of the rice seeds covered only with sample C.

Thus, it has been revealed that, when a rice seed is covered with steelmaking slag and then covered with gypsum on the outside, the mass per seed of the steelmaking slag-coated seed can be increased, and yet the germination rate can be kept high.

### [Test Example 8] (use of gypsum as additive)

Steelmaking slag sample C described in Test Example 1 and materials in which gypsum was added to sample C at mass ratios of 90%:10%, 80%:20%, and 50%:50% were prepared. Each sample was suspended in water so that the ratio, to water, of sample C or each of the materials in which gypsum was added to sample C might be 66 mass%, 40 Koshihikari seeds were put into the suspension and stirred, and the seeds were extracted and dried at room temperature for 24 hours; thus, rice seeds covered with sample C or each of the materials in which gypsum was added to sample C at different ratios were produced.

Table 21 below shows the average mass per seed of the rice seeds covered with sample C and each of the materials in which gypsum was added to sample C at mass ratios of 90%:10%, 80%:20%, and 50%:50%. Also the average mass per seed of not-covered rice seeds is shown. Further, the mass of the not-covered seed was subtracted from the mass of the covered rice seed to calculate the mass of the covering substance, and the results are shown in Table 21 as well. Also the ratio of the mass of the covering substance to the mass of the not-covered seed is shown.

### [Table 21]

**(Table 21) Mass of rice seed and mass of covering substance per rice seed**

| | Rice seed covered only with sample C | Sample C 90% + gypsum 10% covering | Sample C 80% + gypsum 20% covering | Sample C 50% + gypsum 50% covering | Not-covered rice seed |
|---|---|---|---|---|---|
| Mass of rice seed (g) | 0.0417 | 0.0423 | 0.0410 | 0.0405 | 0.0280 |
| Mass of covering substance (g) | 0.0137 | 0.0143 | 0.0130 | 0.0125 | - |
| Mass of covering substance/ Mass of not-covered seed | 0.49 | 0.51 | 0.46 | 0.45 | - |

In the seed covered only with sample C, the ratio of the mass of the covering substance to the mass of the not-covered seed was 0.49; and also in the seed covered with each of the materials in which gypsum was added to sample C at mass ratios of 90%:10%, 80%:20%, and 50%:50%, the ratio of the mass of the covering substance to the mass of the not-covered seed was almost the same value. Thus, it can be seen that a rice seed can be covered also when each of the materials in which gypsum is added to sample C at mass ratios of 90%:10%, 80%:20%, and 50%:50% is used, like in the case of sample C.

20 rice seeds covered with sample C and 20 rice seeds covered with each of the materials in which gypsum was added to sample C at mass ratios of 90%:10%, 80%:20%, and 50%:50% were naturally dropped once onto an iron plate from a position at a height of 20 cm. The seeds dropped on the iron plate were collected, and the mass was measured to investigate the mass of the covering substance after dropping; and the ratio of the mass of the covering substance after dropping to the mass of the covering substance before dropping was calculated; the results are shown in Table 22 below.

### [Table 22]

**(Table 22) Effect on mass of covering substance by dropping onto iron plate**

| | Rice seed covered only with sample C | Sample C 90% + gypsum 10% covering | Sample C 80% + gypsum 20% covering | Sample C 50% + gypsum 50% covering |
|---|---|---|---|---|
| Mass of covering substance after dropping (g) | 0.0090 | 0.0096 | 0.0089 | 0.0086 |
| Mass of covering substance after dropping/ Mass of covering substance before dropping | 0.66 | 0.67 | 0.68 | 0.69 |

The ratio of the mass of the covering substance after dropping to the mass of the covering substance before dropping was almost the same value between the case of being covered only with sample C and the case of being covered with each of the materials in which gypsum was added to sample C at mass ratios of 90%:10%, 80%:20%, and 50%:50%; thus, it has been found that a rice seed can be covered with a material in which gypsum is added to steelmaking slag.

Drying was performed for 24 hours and it was checked that the entire covering substance was sufficiently solidified, and then a germination test was performed. A piece of circular filter paper (diameter: 11 cm) was laid over a plastic laboratory dish with a diameter of 11 cm. Distilled water was added, and the piece of filter paper was shallowly immersed in the distilled water. 20 rice seeds covered only with sample C and 20 rice seeds covered with each of the materials in which gypsum was added to sample C were put individually on the pieces of filter paper shallowly immersed in the distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. In addition to the germination test using the not-starch-treated rice seeds, also a germination test using rice seeds that were treated with starch by the method described in Test Example 6 was similarly performed for comparison. Table 23 below is the results of the germination rate.

### [Table 23]

**(Table 23) Results of germination rate (%)**

| | No covering | Sample C covering | Sample C 90% + gypsum 10% covering | Sample C 80% + gypsum 20% covering | Sample C 50% + gypsum 50% covering |
|---|---|---|---|---|---|
| Not-starch-treated rice seed | 85 | 85 | 80 | 80 | 40 |
| Starch-treated rice seed | 85 | 85 | 85 | 80 | 50 |

rate was 80% or more, which was a high germination rate like in the not-covered seeds, in both the not-starch-treated rice seeds and the starch-treated rice seeds. On the other hand, the germination rate of the seeds covered with the material in which the ratio at which gypsum was added to sample C was 50%:50% was 40% and 50%, which were low. Thus, it is presumed that the upper limit of the ratio at which gypsum is added to steelmaking slag on the occasion when a material in which gypsum is added to steelmaking slag is used for the covering of a seed is appropriately 20%.

### [Test Example 9] (use of iron powder as additive)

Steelmaking slag sample C described in Test Example 1, materials in which iron powder was added to sample C at mass ratios of 80%:20%, 50%:50%, and 20%:80%, and iron powder were prepared. Sample C, each of the materials in which iron powder was added to sample C, or iron powder was suspended in water so that the ratio to water might be 66 mass%, 20 Koshihikari seeds were put into the suspension and stirred, and the seeds were extracted and dried at room temperature for 24 hours; thus, rice seeds covered only with sample C, rice seeds covered with each of the materials in which iron powder was added to sample C, and rice seeds covered only with iron powder were produced. Further, 20 Koshihikari seeds were soaked for 10 minutes in a liquid in which starch was suspended in water so that the concentration might be 50 mass%, and then the seeds were extracted from the starch suspension; also the extracted 20 Koshihikari seeds were similarly put into a suspension of sample C, a suspension of each of the materials in which iron powder was added to sample C, or a suspension of iron powder and stirred, and the seeds were extracted and dried at room temperature for 24 hours; thus, starch-treated rice seeds covered with sample C, starch-treated rice seed covered with each of the materials in which iron powder was added to sample C, and starch-treated rice seeds covered with iron powder were produced.

Table 24 below shows the average mass per seed of the not-starch-treated rice seeds covered with sample C, the not-starch-treated rice seeds covered with each of the materials in which iron powder was added to sample C at mass ratios of 80%:20%, 50%:50%, and 20%:80%, and the not-starch-treated rice seeds covered with iron powder. Also the average mass per seed of not-covered rice seeds is shown as well. Further, the mass of the not-covered seed was subtracted from the mass of the covered rice seed to calculate the mass of the covering substance, and the results are shown in Table 24 as well. Also the ratio of the mass of the covering substance to the mass of the not-covered seed is shown.

### [Table 24]

**(Table 24) Mass of rice seed and mass of covering substance per rice seed (not-starch-treated seed)**

| | Covered only with sample C | Sample C 80% + iron powder 20% covering | Sample C 50% + iron powder 50% covering | Sample C 20% iron powder 80% covering | Covered only with iron powder | Not-covered rice seed |
|---|---|---|---|---|---|---|
| Mass of rice seed (g) | 0.0420 | 0.0438 | 0.0475 | 0.0497 | 0.0520 | 0.0280 |
| Mass of covering substance (g) | 0.0140 | 0.0158 | 0.0195 | 0.0217 | 0.0240 | - |
| Mass of covering substance/ Mass of not-covered seed | 0.50 | 0.56 | 0.70 | 0.78 | 0.86 | - |

As shown in Table 24, since iron powder has a larger specific gravity than steelmaking slag, the mass of the covering substance tended to become larger as the existence ratio of iron powder became larger.

Table 25 below shows the average mass per seed of the starch-treated rice seeds covered with sample C, the starch-treated rice seeds covered with each of the materials in which iron powder was added to sample C at mass ratios of 80%:20%, 50%:50%, and 20%:80%, and the starch-treated rice seeds covered with iron powder. Further, the mass of the not-covered seed was subtracted from the mass of the covered rice seed to calculate the mass of the covering substance, and the results are shown in Table 25 as well. Also the ratio of the mass of the covering substance to the mass of the not-covered seed is shown.

### [Table 25]

**(Table 25) Mass of rice seed and mass of covering substance per rice seed (starch-treated seed)**

| | Covered only with sample C | Sample C 80% + iron powder 20% covering | Sample C 50% + iron powder 50% covering | Sample C 20% + iron powder 80% covering | Covered only with iron powder |
|---|---|---|---|---|---|
| Mass of rice seed (g) | 0.0581 | 0.0602 | 0.0618 | 0.0634 | 0.0660 |
| Mass of covering substance (g) | 0.0301 | 0.0322 | 0.0338 | 0.0354 | 0.0380 |
| Mass of covering substance/ Mass of not-covered seed | 1.08 | 1.15 | 1.21 | 1.26 | 1.36 |

In the starch-treated seed, the mass of the covering substance was a larger value than in the case of the not-starch-treated seed shown in Table 24. Thus, it can be seen that, by using a starch-treated seed, it becomes possible to produce not only a rice seed covered with steelmaking slag but also a rice seed in which iron powder is added to steelmaking slag and a rice seed in which a larger amount of iron powder is adhered as a covering substance.

20 not-starch-treated rice seeds covered with sample C, 20 not-starch-treated rice seeds covered with each of the materials in which iron powder was added to sample C at mass ratios of 80%:20%, 50%:50%, and 20%:80%, and 20 not-starch-treated rice seeds covered with iron powder were naturally dropped once onto an iron plate from a position at a height of 20 cm. The seeds dropped on the iron plate were collected, and the mass was measured to investigate the mass of the covering substance after dropping; and the ratio of the mass of the covering substance after dropping to the mass of the covering substance before dropping was calculated; the results are shown in Table 26 below.

### [Table 26]

**(Table 26) Effect on mass of covering substance by dropping onto iron plate (not-starch-treated seed)**

| | Covered only with sample C | Sample C 80% + iron powder 20% covering | Sample C 50% + iron powder 50% covering | Sample C 20% + iron powder 80% covering | Covered only with iron powder |
|---|---|---|---|---|---|
| Mass of covering substance after dropping (g) | 0.0091 | 0.0098 | 0.0115 | 0.0124 | 0.0132 |
| Mass of covering substance after dropping/ Mass of covering substance before dropping | 0.65 | 0.62 | 0.59 | 0.57 | 0.55 |

In the not-starch-treated seed, approximately 60% of the covering substance remained after one drop onto the iron plate in all of the case where the seed was covered with steelmaking slag, the case where the seed was covered with each of the materials in which iron powder was added to steelmaking slag, and the case where the seed was covered with iron powder. The case of the smallest amount of covering substance remaining is the case where the seed was covered with iron powder, in which 55% remained.

20 starch-treated rice seeds covered with sample C, 20 starch-treated rice seeds covered with each of the materials in which iron powder was added to sample C at mass ratios of 80%:20%, 50%:50%, and 20%:80%, and 20 starch-treated rice seeds covered with iron powder were naturally dropped once onto an iron plate from a position at a height of 20 cm. The seeds dropped on the iron plate were collected, and the mass was measured to investigate the mass of the covering substance after dropping; and the ratio of the mass of the covering substance after dropping to the mass of the covering substance before dropping was calculated; the results are shown in Table 27 below.

### [Table 27]

**(Table 27) Effect on mass of covering substance by dropping onto iron plate (starch-treated seed)**

| | Covered only with sample C | Sample C 80% + iron powder 20% covering | Sample C 50% + iron powder 50% covering | Sample C 20% + iron powder 80% covering | Covered only with iron powder |
|---|---|---|---|---|---|
| Mass of covering substance after dropping (g) | 0.0130 | 0.0145 | 0.0175 | 0.0198 | 0.0215 |
| Mass of covering substance after dropping/ Mass of covering substance before dropping | 0.93 | 0.92 | 0.90 | 0.91 | 0.90 |

In the starch-treated seed, the amount of covering substance remaining after one drop onto the iron plate was larger in all of the case where the seed was covered with steelmaking slag, the case where the seed was covered with each of the materials in which iron powder was added to steelmaking slag, and the case where the seed was covered with iron powder than in the not-starch-treated seed shown in Table 26. It has been found that, by starch treatment, the fixability of the covering substance was increased and the covering substance became less likely to peel off in all of the case of being covered with steelmaking slag, the case of being covered with each of the materials in which iron powder was added to steelmaking slag, and the case of being covered with iron powder.

Further, drying was performed for 24 hours and it was checked that the entire covering substance was sufficiently solidified, and then a germination test was performed.

A piece of circular filter paper (diameter: 11 cm) was laid over a plastic laboratory dish with a diameter of 11 cm. Distilled water was added, and the piece of filter paper was shallowly immersed in the distilled water. 20 rice seeds covered only with sample C and 20 rice seeds covered with each of the materials in which iron powder was added to sample C were put individually on the pieces of filter paper shallowly immersed in the distilled water. Each laboratory dish was placed into a constant temperature oven of 30°C in a state where an upper cover was laid on the laboratory dish, and a germination test was performed. On the 7th day, the number of germinated seeds was measured for the laboratory dish of each sample, and the germination rate was calculated. Further, the length of a root was measured, and the average length of the root was calculated. Further, the pH of the water remaining in the laboratory dish was measured. For comparison, also a germination test using not-covered rice seeds was similarly performed.

In addition to the germination test using the not-starch-treated rice seeds, also a germination test using rice seeds that were treated with starch by the method described in Test Example 6 was similarly performed for comparison. Table 28 below is the results of the germination rate, the average length of the root, and the pH of the remaining water.

### [Table 28]

**(Table 28) Germination rate, average length of root, and pH of remaining water**

| | | No covering | Sample C covering | Sample C 80% + iron powder 20% covering | Sample C 50% + iron powder 50% covering | Sample C 20% + iron powder 80% covering | Iron powder covering |
|---|---|---|---|---|---|---|---|
| Not-starch-treated rice seed | Germination rate (%) | 85 | 85 | 80 | 80 | 80 | 80 |
| | Average length of root (mm) | 52 | 54 | 56 | 48 | 34 | 26 |
| | pH of remaining water | 5.1 | 8.0 | 6.9 | 5.9 | 4.4 | 3.8 |
| Starch-treated rice seed | Germination rate (%) | 85 | 85 | 85 | 80 | 80 | 80 |
| | Average length of root (mm) | 54 | 56 | 58 | 50 | 38 | 30 |
| | pH of remaining water | 5.0 | 7.8 | 6.7 | 5.8 | 4.3 | 3.7 |

It has been found that, in all the cases, the germination rates of both the not-starch-treated rice seeds and the starch-treated rice seeds were 80% or more. However, in the case where the mass ratio of iron powder of the covering substance was 80% and the case of only iron powder, the average length of the root was 34 mm and 26 mm in the not-starch-treated rice seed and was 38 mm and 30 mm in the starch-treated rice seed, which were clearly short, and the growth suppression of roots was seen. In the case where the mass ratio of iron powder of the covering substance was 80% and the case of being covered only with iron powder, the pH of the remaining water was 4.4 and 3.8 for the not-starch-treated rice seeds and was 4.3 and 3.7 for the starch-treated rice seeds, and acidification was exhibited. It is presumed that, when iron powder existed, dissolved-out divalent iron ions were oxidized into trivalent iron ions by the action of oxygen in the air and microorganisms such as iron-oxidizing bacteria, and trivalent iron ions were deposited in a chemical form such as ferric hydroxide; thus, acidification occurred. It is presumed that, in the case where the ratio of iron powder of the seed-covering substance was high, the growth of roots was suppressed by the acidification of water around the seed. On the other hand, in the cases where the mass ratio between steelmaking slag and iron powder was 80%:20% and 50%:50%, the growth of roots was good, and also the pH of the remaining water was of neutrality to weak acidity, which are presumably suitable for the growth of roots. This is presumed to be because the neutralization effect by the alkalinity of the steelmaking slag acted on the acidification derived from the iron powder.

Thus, although it is possible to mix iron powder with steelmaking slag for use as an additive, it is presumed that the mass ratio of iron powder added to steelmaking slag is preferably 50 mass% or less.

### [Test Example 10] (use of water containing molasses 1) (settleability and collapsability in water)

Using the steelmaking slag of sample C of the composition shown in Table 10, sieved-out particles with a maximum particle size of less than 600 µm were prepared. Further, varieties of water in which molasses was dissolved in pure water so that the mass ratio of molasses might be 5 mass%, 10 mass%, 25 mass%, 50 mass%, and 75 mass% were prepared. As a control, also pure water not containing molasses (the mass ratio of molasses being 0 mass%) was prepared.

The water containing molasses at each of the mass ratios mentioned above was added to sample C so that the mass ratio of the water in the mixture of sample C and the water might be 30 mass%, and mixing was performed.

Rice seeds (variety: "Koshihikari") were put into the mixture of sample C and the water and mixing was performed, and thus the rice seeds were covered with sample C mentioned above. After that, the covered rice seeds were dried at room temperature for 24 hours in a well-ventilated state.

The mass of the covering substance of the rice seed covered with the mixture of sample C and each of the varieties of water with different mass ratios of molasses on the assumption that the mass before covering is 1 is shown in Table 29 below.

### [Table 29]

**(Table 29) Mass ratio of molasses in water containing molasses and mass of covering substance (on assumption that mass of rice seed before covering is 1)**

| | Mass ratio of molasses in water containing molasses | | | | | |
|---|---|---|---|---|---|---|
| | 0% | 5% | 10% | 25% | 50% | 75% |
| Mass of covering substance | 0.5 | 0.7 | 1.0 | 1.2 | 1.2 | × |

As is clear from Table 29 above, in the cases where the mass ratio of molasses in the water containing molasses was 10%, 25%, and 50%, the mass of the covering substance on the assumption that the mass of the rice seed before covering is 1 was 1.0, 1.2, and 1.2, and it can be seen that the mass of the steelmaking slag-coated seed was greatly increased by the covering of sample C, which is steelmaking slag, from the original rice seed. By the increase in the mass of the steelmaking slag-coated seed, an effect in which steelmaking slag-coated seeds directly sown are prevented from floating on the water in a paddy field and running off can be expected.

In the case where the mass ratio of molasses in the water containing molasses was 75%, when this water was added to sample C, sample C became lumps, and the rice seed was not able to be covered (in Table 29, indicated by "X").

Next, a container containing a sodium chloride aqueous solution (specific gravity: 1.4) was prepared, and it was investigated whether a steelmaking slag-coated seed produced using each of the varieties of water with different mass ratios of molasses settled or not. Further, the container with which the settleability was investigated was gently shaken for 1 hour (10 rpm), and also the settleability 1 hour later was investigated. The obtained results are shown in Table 30 below. In Table 30, the circle sign means that the steelmaking slag-coated seed settled, and the "X" sign means that the steelmaking slag-coated seed did not settle. Further, "X test unperformable" in the case where the mass ratio of molasses is 75% means that sample C became lumps and the rice seed was not able to be covered, and consequently it was impossible to produce a steelmaking slag-coated seed in the first place.

### [Table 30]

**(Table 30) Settleability of covered rice seed produced using each of varieties of water with different mass ratios of molasses**

| | Mass ratio of molasses in water used in covered rice seed production | | | | | |
|---|---|---|---|---|---|---|
| | 0% | 5% | 10% | 25% | 50% | 75% |
| Settleability | ○ | ○ | ○ | ○ | ○ | × Test unperforma ble |
| Settleability 1 hour later | × | × | ○ | ○ | ○ | × Test unperforma ble |

As is clear from Table 30, the steelmaking slag-coated seed produced using the water not containing molasses or the water containing 5 mass% molasses exhibited settleability immediately after the start of the test. However, when gentle shaking was performed for 1 hour, the covering substance partially peeled off and collapsed, and consequently stopped exhibiting settleability. This result suggests that, in water having a flow, there is a concern that the covering substance of the steelmaking slag-coated seed will partially peel off, and the seed will float and run off. However, in the actual direct sowing of steelmaking slag-coated seeds, steelmaking slag-coated seeds are sown not in the water but on wet paddy field soil exposed to the air; therefore, it is presumed that there is little fear of runoff due to running water like in the present test.

On the other hand, in the steelmaking slag-coated seed produced using the water containing 10 mass%, 25 mass%, or 50 mass% molasses, even after gentle shaking was performed for 1 hour, the covering substance hardly fell off, and consequently the settleability was maintained.

From the above results, it has been revealed that, in the steelmaking slag-coated seed produced using water containing 10 mass% or more and 50 mass% or less molasses, the covering substance adheres to the seed stably and firmly, and the covering substance is less likely to peel off or fall off even in water having a flow.

### [Test Example 11] (use of water containing molasses 2) (germination test)

A piece of circular filter paper (diameter: 11 cm) was laid over a plastic laboratory dish with a diameter of 11 cm. Distilled water was added, and the piece of filter paper was shallowly immersed in the distilled water. 10 steelmaking slag-coated seeds covered with steelmaking slag sample C that were produced using each of the varieties of water with different mass ratios of molasses in Test Example 10 were put on the piece of filter paper shallowly immersed in the distilled water. Further, water not containing molasses was added at 30 mass% to a mixture in which iron powder with a particle size of less than 600 µm and gypsum were mixed at a mass ratio of 9:1, and mixing was performed; rice seeds were added to the prepared mixture; the resulting rice seeds covered with a mixture of iron powder and gypsum were dried at room temperature for 24 hours in the air; and 10 of the steelmaking slag-coated seeds thus obtained and 10 rice seeds not covered with steelmaking slag as a control were put individually on pieces of filter paper shallowly immersed in distilled water in a laboratory dish, in a similar manner to the above.

In the case where the water with a mass ratio of molasses of 75 mass% was used, as shown in Test Example 10, although it was attempted to add this water to sample C, which is steelmaking slag, and perform mixing, sample C became lumps and the rice seed was not able to be covered, and consequently it was impossible to perform a germination test.

Each laboratory dish was placed into a constant temperature oven of 30°C in a state where an upper cover was laid on the laboratory dish, and a germination test was performed. On the 6th day, the number of germinated seeds was measured for the laboratory dish of each sample, and the germination rate was calculated. For the germinated seed, the length and the mass (fresh weight) of the radicle were measured, and the average length (mm) and the average mass (fresh weight) (g) of the radicle per seed were calculated. The obtained results are shown in Table 31 below.

### [Table 31]

**(Table 31) Results of germination test of covered rice seed covered with steelmaking slag sample C produced with each of varieties of water with different mass ratios of molasses, covered rice seed covered with mixture of iron powder and gypsum, and not-covered rice seed**

| | No covering | Iron powder:gypsum (9:1) mixture covering | Mass ratio of molasses in water used in covered rice seed production | | | | | |
|---|---|---|---|---|---|---|---|---|
| | | | 0% | 5% | 10% | 25% | 50% | 75% |
| Germination rate(%) | 80 | 80 | 80 | 90 | 80 | 90 | 80 | × Test unperformable |
| Average length of radicle (mm) | 52 | 44 | 54 | 62 | 60 | 62 | 50 | × Test unperformable |
| Average mass of radicle (g) | 0.008 | 0.004 | 0.008 | 0.008 | 0.008 | 0.009 | 0.008 | × Test unperformable |

As is clear from Table 31, with regard to the germination rate, a result showing a germination rate almost equal to the germination rate of the not-covered seeds was obtained in all the tested steelmaking slag-coated seeds.

With regard to the average length of the radicle, in the cases where the mass ratio of molasses in the water that was used during the production of the covered rice seed was 5 mass%, 10 mass%, and 25 mass%, the average length of the radicle of the steelmaking slag-coated seed was longer than the average length of the radicle of the not-covered rice seed of a control. It is presumed that, by using water containing molasses, the elongation of roots was more promoted by the effect of potassium etc. contained in the molasses. On the other hand, in the case of being covered with the mixture of iron powder and gypsum, the average length of the radicle was clearly shorter than the average length of the radicle of the not-covered rice seed and the steelmaking slag-coated seed covered with steelmaking slag sample C that was produced using each of the varieties of water with different mass ratios of molasses. In the case of being covered with the mixture of iron powder and gypsum, red rust adhered to and covered the entire surface of the radicle, and it is presumed that excessive iron inhibited the elongation of roots.

With regard to the average mass of the radicle, the average mass of the radicle of the covered rice seed covered with the mixture of iron powder and gypsum was a clearly smaller value than the average mass of the radicle of the not-covered rice seed and the steelmaking slag-coated seed covered with steelmaking slag sample C that was produced using each of the varieties of water with different mass ratios of molasses. Thus, it has been revealed that the adhesion of red rust that covered the surface of the radicle inhibited the growth of roots in terms of not only the elongation but also the mass of roots.

From the above results, it has been revealed that both the germination rate and the growth of roots were good in the steelmaking slag-coated seed produced using water containing 5 mass% or more and 50 mass% or less molasses.

However, as shown in Test Example 10, the steelmaking slag-coated seed produced using the water containing 5 mass% molasses has a possibility that, in the water, the covering substance will be unstable and the covering substance will partially peel off or fall off; thus, it is presumed that a steelmaking slag-coated seed produced using water containing 10 mass% or more and 50 mass% or less molasses is more preferable.

### [Test Example 12] (use of water containing molasses 3) (test using different kinds of steelmaking slag)

Using 5 kinds of steelmaking slag samples A to E of the composition shown in Table 10, sieved-out particles with a maximum particle size of less than 600 µm were prepared. Further, water in which molasses was dissolved in pure water so that the mass ratio of molasses might be 25 mass% was prepared.

The water containing 25 mass% molasses was added to each of samples A to E so that the mass ratio of the water in the mixture of each of samples A to E and the water might be 30 mass%, and mixing was performed.

Rice seeds (variety: "Koshihikari") were put into the mixture of each of samples A to E and the water and mixing was performed, and thus the rice seeds were covered with each of samples A to E. After that, the covered rice seeds were dried at room temperature for 24 hours in a well-ventilated state.

Similarly, a mixture in which iron powder with a particle size of less than 600 µm and gypsum were mixed at a mass ratio of 9:1 was prepared, pure water was added so that the mass ratio of pure water in the new mixture of the above mixture and pure water might be 30 mass%, and mixing was performed. Rice seeds (variety: "Koshihikari") were put into the mixture of iron powder, gypsum, and water and mixing was performed, and thus the rice seeds were covered with a mixture of iron powder and gypsum (iron powder:gypsum = 9:1). After that, the covered rice seeds were dried at room temperature for 24 hours in a well-ventilated state.

For the rice seed covered with each of steelmaking slag samples A to E or the mixture of iron powder and gypsum produced in the above manner, the mass of the covering substance on the assumption that the mass before covering is 1 is shown in Table 32 below.

### [Table 32]

**(Table 32) Mass of covering substance per covered rice seed produced (on assumption that mass of rice seed before covering is 1)**

| | Iron powder:gypsum (9:1) mixture covering | Sample A | Sample B | Sample C | Sample D | Sample E |
|---|---|---|---|---|---|---|
| Mass of covering subs | 1.5 | 1.2 | 0.9 | 0.9 | 0.9 | 0.8 |

As is clear from Table 32 above, the mass of the covering substance per seed on the assumption that the mass of the rice seed before covering is 1 was the largest value in the case of being covered with the mixture of iron powder and gypsum. This is due to the fact that the specific gravity of iron powder is larger than the specific gravity of steelmaking slag. However, also in the case of being covered with each of samples A to E, which are steelmaking slag, the mass of the covering substance was 0.8 to 1.2 when the steelmaking slag-coated seed was produced using the water containing 25 mass% molasses. For example, as compared to the result of Test Example 1 in which the mass of the covering substance in the case of being covered with sample C using water not containing molasses was 0.6, the mass of the covering substance was 0.9 in the case of being covered with sample C in the present Test Example; thus, it can be seen that, by using water containing 25 mass% molasses, a larger amount of steelmaking slag can be adhered to the rice seed, and the mass of the steelmaking slag-coated seed can be increased.

A germination test was performed using steelmaking slag-coated seeds produced in the above manner and not-covered rice seeds (variety: "Koshihikari") as a control.

A piece of circular filter paper (diameter: 11 cm) was laid over a plastic laboratory dish with a diameter of 11 cm. Distilled water was added, and the piece of filter paper was shallowly immersed in the distilled water. 10 steelmaking slag-coated seeds covered with each of steelmaking slag samples A to E or the mixture of iron powder and gypsum (iron powder:gypsum = 9:1) were put on the piece of filter paper shallowly immersed in the distilled water.

Each laboratory dish was placed into a constant temperature oven of 30°C in a state where an upper cover was laid on the laboratory dish, and a germination test was performed. On the 5th day, the number of germinated seeds was measured for the laboratory dish of each sample, and the germination rate was calculated. For the germinated seed, the length and the mass (fresh weight) of the radicle were measured, and the average length (mm) and the average mass (fresh weight) (g) of the radicle per seed were calculated. The obtained results are shown in Table 33 below.

### [Table 33]

**(Table 33) Results of germination test of covered rice seed covered with each of steelmaking slag samples A to E produced with water containing 25 mass% molasses, covered rice seed covered with mixture of iron powder and gypsum, and not-covered rice seed**

| | No covering | Iron powder gypsum (9:1) mixture covering | Covered rice seed produced using water containing 25 mass% molasses | | | | |
|---|---|---|---|---|---|---|---|
| | | | Sample A | Sample B | Sample C | Sample D | Sample E |
| Germination rate(%) | 100 | 90 | 100 | 100 | 100 | 100 | 100 |
| Average length of radicle (mm) | 29 | 13 | 32 | 39 | 32 | 51 | 37 |
| Average mass of radicle (g) | 0.004 | 0.002 | 0.005 | 0.005 | 0.005 | 0.007 | 0.006 |

As is clear from Table 33 above, a large difference was not seen in germination rate between all the tested seeds.

Further, in the steelmaking slag-coated seed covered with each of steelmaking slag samples A to E using the water containing 25 mass% molasses, the growth of roots was better in terms of both elongation and mass (fresh weight) than in the not-covered rice seed and the rice seed covered with the mixture of iron powder and gypsum. In particular, in the rice seed covered with sample D using the water containing 25 mass% molasses, the growth of roots was particularly good. On the other hand, in the rice seed covered with the mixture of iron powder and gypsum, the surface of the roots was covered with red rust derived from the iron powder, and the growth of roots was inhibited, similarly to the result of Test Example 11.

Thus, it has been revealed that the steelmaking slag-coated seed that is covered with, using the water containing 25 mass% molasses, each of samples A to E, which are steelmaking slag containing 25 mass% or more and 50 mass% or less CaO, 8 mass% or more and 30 mass% or less SiO₂, 1 mass% or more and 20 mass% or less MgO, 1 mass% or more and 25 mass% or less Al₂O₃, 5 mass% or more and 35 mass% or less Fe, 1 mass% or more and 8 mass% or less Mn, and 0.1 mass% or more and 5 mass% or less P₂O₅ can be expected to germinate in direct sowing, and can be expected to exhibit also the fertilizer effect of promoting the growth of roots, as compared to the not-covered rice seed and the rice seed covered with the mixture of iron powder and gypsum.

### [Test Example 13] (use of water containing sodium alginate)

Using the steelmaking slag of sample C of the composition shown in Table 10, sieved-out particles with a maximum particle size of less than 600 µm were prepared. Sample C and water were mixed together so that the mass ratio of water in the mixture might be 30 mass%. Rice seeds (variety: "Koshihikari") were put into the mixture of sample C and water and mixing was performed, and thus the rice seeds were covered with sample C. The mass of the covering substance per seed was 0.6 on the assumption that the mass of the rice seed before covering is 1. The rice seeds covered with sample C were air-dried for 3 hours in a well-ventilated state. In this state, the surface of the rice seed is covered only with sample C, which is steelmaking slag. The rice seeds covered with sample C were divided into 6 groups; one group was used as covered rice seeds that were allowed to stand as they were without any action, whereas the other 5 groups were sprayed with 0.1 mass%, 0.5 mass%, 1 mass%, 5 mass%, and 10 mass% sodium alginate aqueous solutions, respectively, to wet the surface of the covering substance. All the 6 groups were air-dried for 24 hours in a well-ventilated state.

A container containing a sodium chloride aqueous solution (specific gravity: 1.4) was prepared, and it was investigated whether the covered rice seed of which the surface was sprayed with each of the sodium alginate aqueous solutions with the different concentrations mentioned above and which was dried and the covered rice seed of which the surface was not sprayed with a sodium alginate aqueous solution settled or not. Further, the container with which the settleability was investigated was gently shaken for 1 hour (10 rpm), and also the settleability 1 hour later was investigated. The obtained results are shown in Table 34 below. In Table 34, the circle sign means that the covered rice seed settled, and the "X" sign means that the covered rice seed did not settle.

### [Table 34]

**(Table 34) Settleability of covered rice seed of which surface was sprayed with each of sodium alginate aqueous solutions of different concentrations and which was dried**

| | Not sprayed | Concentration of sprayed sodium alginate aqueous solution | | | | |
|---|---|---|---|---|---|---|
| | | 0.1 mass% | 0.5 mass% | 1 mass% | 5 mass% | 10 mass% |
| Settleability | ○ | ○ | ○ | ○ | ○ | ○ |
| Settleability 1 hour later | × | × | ○ | ○ | ○ | ○ |

As is clear from Table 34 above, all the tested covered rice seeds exhibited settleability immediately after the start of the test. However, when gentle shaking was performed for 1 hour, in the covered rice seed of which the surface of the covering substance was not sprayed with a sodium alginate aqueous solution and the covered rice seed of which the surface of the covering substance was sprayed with a 0.1 mass% sodium alginate aqueous solution, the covering substance partially peeled off and collapsed in the sodium chloride aqueous solution, and consequently stopped exhibiting settleability. This suggests that, in water having a flow, there is a concern that the covering substance of the covered rice seed will partially peel off, and the seed will float and run off. However, in the actual direct sowing of covered rice seeds, covered rice seeds are sown not in the water but on wet paddy field soil exposed to the air; therefore, it is presumed that there is little fear of runoff due to running water like in the present Test Example.

On the other hand, in the covered rice seed of which the surface of the covering substance was sprayed with each of the 0.5 mass%, 1 mass%, 5 mass%, and 10 mass% sodium alginate aqueous solutions, the peeling-off and falling-off of the covering substance hardly occurred, and the settleability was maintained even after gentle shaking was performed for 1 hour.

From the above results, it has been revealed that, in the covered rice seed of which the surface of the covering substance is sprayed with each of the 0.5 mass%, 1 mass%, 5 mass%, and 10 mass% sodium alginate aqueous solutions, the covering substance adheres to the seed stably and firmly, and the covering substance is less likely to peel off or fall off even in water having a flow.

A germination test was performed using covered rice seeds covered with sample C that were surface-treated by spraying the surface of the covering substance mentioned above with the sodium alginate aqueous solution of each concentration, covered rice seeds that were not sprayed with a sodium alginate aqueous solution, and not-covered rice seeds (variety: "Koshihikari") as a control.

A piece of circular filter paper (diameter: 11 cm) was laid over a plastic laboratory dish with a diameter of 11 cm. Distilled water was added, and the piece of filter paper was shallowly immersed in the distilled water. 10 covered rice seeds of which the surface was sprayed with each of the sodium alginate aqueous solutions of different concentrations and which was dried, 10 covered rice seeds of which the surface was not sprayed with a sodium alginate aqueous solution, and 10 not-covered rice seeds as a control were put individually on the pieces of filter paper shallowly immersed in the distilled water.

Each laboratory dish was placed into a constant temperature oven of 30°C in a state where an upper cover was laid on the laboratory dish, and a germination test was performed. On the 6th day, the number of germinated seeds was measured for the laboratory dish of each sample, and the germination rate was calculated. For the germinated seed, the length and the mass (fresh weight) of the radicle were measured, and the average length (mm) and the average mass (fresh weight) (g) of the radicle per seed were calculated. The obtained results are shown in Table 35 below.

### [Table 35]

**[Table 35] Results of germination test of covered rice seed of which surface was sprayed with each of sodium (Table 35) alginate aqueous solutions of different concentrations and which was dried, covered rice seed of which surface was not sprayed with sodium alginate aqueous solution, and not-covered rice seed**

| | No covering | Concentration of sprayed sodium alginate aqueous solution | | | | |
|---|---|---|---|---|---|---|
| | | 0.1 mass% | 0.5 mass% | 1 mass% | 5 mass% | 10 mass% |
| Germination rate(%) | 90 | 90 | 100 | 90 | 100 | 70 |
| Average length of radicle(mm) | 75 | 80 | 85 | 90 | 80 | 60 |

As is clear from Table 35 above, with regard to the germination rate, in the covered rice seed of which the surface of the covering substance was sprayed with the 10 mass% sodium alginate aqueous solution, the surface was hardened, and a reduction in germination rate was seen.

With regard to the growth of roots, the growth of roots was better in the covered rice seed of which the surface of the covering substance was sprayed with each of the 0.1 mass% to 5 mass% sodium alginate aqueous solutions than in the not-covered seed.

Thus, from the results of the settleability 1 hour later and the germination rate, it has been revealed that a covered rice seed of which the surface of the covering substance is sprayed with a 0.5 mass% to 5 mass% sodium alginate aqueous solution is preferable.

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

### Industrial Applicability

Steelmaking slag-coated seeds according to the first and second embodiments of the present invention can be produced with less time and effort of the worker and at lower cost, and yet can include a sufficient amount of a uniform coating layer based on steelmaking slag; and thus provide high added value to steelmaking slag produced as a by-product in a steel mill. Furthermore, the steelmaking slag-coated seed can contribute to improvements in the management efficiency of the farmer, productivity, food self-sufficiency rate, etc.

### Reference Signs List

- 1: steelmaking slag-coated seed
- 2: seed
- 3: steelmaking slag layer

## Claims

1. A steelmaking slag-coated seed comprising:
a seed; and
a steelmaking slag layer formed on an outside of the seed,
wherein the steelmaking slag layer is a covering layer made of steelmaking slag powder obtained by pulverizing steelmaking slag, and
the steelmaking slag contains 10 mass% or more iron and 30 mass% or more calcium relative to all components of the steelmaking slag.

2. The steelmaking slag-coated seed according to claim 1,
wherein the seed is a seed of a rice plant.

3. The steelmaking slag-coated seed according to claim 1 or 2,
wherein the steelmaking slag contains 10 mass% to 30 mass% iron and 30 mass% to 50 mass% calcium relative to all the components of the steelmaking slag.

4. A steelmaking slag-coated seed,
wherein a seed is covered with steelmaking slag powder containing 25 mass% or more and 50 mass% or less CaO and 8 mass% or more and 30 mass% or less SiO₂.

5. The steelmaking slag-coated seed according to claim 4,
wherein the steelmaking slag powder further contains 1 mass% or more and 20 mass% or less MgO, 1 mass% or more and 25 mass% or less Al₂O₃, 5 mass% or more and 35 mass% or less Fe, 1 mass% or more and 8 mass% or less Mn, and 0.1 mass% or more and 5 mass% or less P₂O₅.

6. A steelmaking slag-coated seed,
wherein a seed is covered with one or both of dephosphorization slag and decarburization slag that are kinds of steelmaking slag powder.

7. The steelmaking slag-coated seed according to any one of claims 4 to 6,
wherein the steelmaking slag powder has a particle size of 600 µm or less.

8. The steelmaking slag-coated seed according to any one of claims 1 to 7,
wherein the steelmaking slag powder has a particle size of 600 µm or less, and contains powder with a particle size of 45 µm or less at 20% or more.

9. The steelmaking slag-coated seed according to any one of claims 4 to 8,
wherein the seed is covered with a mixture of the steelmaking slag powder and one or both of gypsum and iron powder.

10. The steelmaking slag-coated seed according to any one of claims 1 to 9,
wherein the seed is a seed covered with starch.

11. The steelmaking slag-coated seed according to any one of claims 1 to 10,
wherein a surface of the seed is further covered with gypsum.

12. The steelmaking slag-coated seed according to any one of claims 1 to 11,
wherein a covering portion of the seed further contains molasses.

13. A method for producing a steelmaking slag-coated seed,
the steelmaking slag-coated seed including
a seed and
a steelmaking slag layer formed on a surface of the seed,
the method comprising:
a steelmaking slag pulverization process of pulverizing, as steelmaking slag serving as a material of the steelmaking slag layer, steelmaking slag containing 10 mass% or more iron and 30 mass% or more calcium relative to all components of the steelmaking slag into powder;
a seed soaking process of incorporating water into a seed before coating; and
a steelmaking slag coating process of mixing steelmaking slag powder obtained in the steelmaking slag pulverization process and a seed obtained in the seed soaking process and thereby forming a steelmaking slag layer made of the steelmaking slag powder on a surface of the seed.

14. The method for producing a steelmaking slag-coated seed according to claim 13,
wherein the seed is a seed of a rice plant.

15. The method for producing a steelmaking slag-coated seed according to claim 13 or 14,
wherein, in the steelmaking slag pulverization process, the steelmaking slag is pulverized into steelmaking slag powder with a particle size of 600 µm or less.

16. The method for producing a steelmaking slag-coated seed according to any one of claims 13 to 15,
wherein the steelmaking slag powder obtained in the steelmaking slag pulverization process contains powder with a particle size of 45 µm or less at 20% or more.

17. A method for producing a steelmaking slag-coated seed comprising:
covering a seed with a mixture obtained by mixing steelmaking slag powder containing 25 mass% or more and 50 mass% or less CaO and 8 mass% or more and 30 mass% or less SiO₂, and water; and
solidifying the mixture.

18. The method for producing a steelmaking slag-coated seed according to claim 17,
wherein the steelmaking slag powder further contains 1 mass% or more and 20 mass% or less MgO, 1 mass% or more and 25 mass% or less Al₂O₃, 5 mass% or more and 35 mass% or less Fe, 1 mass% or more and 8 mass% or less Mn, and 0.1 mass% or more and 5 mass% or less P₂O₅.

19. A method for producing a steelmaking slag-coated seed comprising:
covering a seed with a mixture obtained by mixing one or both of dephosphorization slag and decarburization slag that are kinds of steelmaking slag powder, and water; and
solidifying the mixture.

20. The method for producing a steelmaking slag-coated seed according to any one of claims 17 to 19,
wherein the seed is covered with a mixture obtained by mixing the steelmaking slag powder, water, and one or both of gypsum and iron powder, and the mixture is solidified.

21. The method for producing a steelmaking slag-coated seed according to any one of claims 17 to 20,
wherein the mass ratio of water in the mixture is 10 mass% or more and 80 mass% or less relative to the total mass of the mixture.

22. The method for producing a steelmaking slag-coated seed according to any one of claims 17 to 21,
wherein the water is water containing 10 mass% or more and 50 mass% or less molasses.

23. The method for producing a steelmaking slag-coated seed according to any one of claims 17 to 22,
wherein a seed soaked in a starch aqueous solution is used as the seed.

24. The method for producing a steelmaking slag-coated seed according to any one of claims 17 to 23,
wherein a surface of the solidified mixture is further covered with gypsum.

25. The method for producing a steelmaking slag-coated seed according to any one of claims 17 to 24,
wherein a surface of the solidified mixture is further wetted with water containing 0.5 mass% or more and 5 mass% or less sodium alginate, and then the solidified mixture is dried.
